# EUROPEAN PATENT APPLICATION

(11) **EP 1 930 721 A2**
(43) Date of publication of application: **11.06.2008**
(21) Application number: 07118878.3
(22) Date of filing: 10.06.2003
(51) Int. Cl.: G01N 27/447

(54) **Method and system for multi-stage isoelectric focussing**

(30) Priority: 07.06.2002 DK 200200875; 09.08.2002 US 402056 P
(62) Divisional of application: 03756977.9
(71) Applicant: Picosep A/S, 5230 Odense M (DK)
(72) Inventor: Schmidt, Henrik, 3360 Herzogenbuchsee (CH); Pryds, Steffen, 5250 Odense SV (DK); Faltum, Carsten, 3480 Fredensborg (DK); Fey, Stephen J., 5491 Blommenslyst (DK); Larsen, Peter Mose, 5260 Odense S (DK); Rubin, Adam, 2765 Smorum (DK)
(74) Representative: Orsnes, Henrik Egede

(57) **Abstract**

The invention relates to a method of separating at least two biocomponents contained in a liquid including having different pI values. The method comprising the steps of: i. providing a first separating path with at least one separating layer comprising one or more pH active components with pH active groups, ii. applying the liquid with the biocomponents to the separating coating, iii. applying a voltage over the separating path, iv. allowing at least some of the biocomponents to travel towards one of the electrodes to one or more collection stations, v. collecting the once separated biocomponents from at least one collection station. The invention also relates to a separating system for use in the method. The separation system comprises a set of separating paths, the separating system comprising 2 or more separating paths that differ from each other with respect to the pH value of the separating coating.

## Description

### Field of the invention

The present invention relates to a method of separating biocomponents contained in a liquid, such as biomolecules including proteins and nucleic acids. The invention also includes a separating system and a separating unit, which can be used in the method.

### Background of the invention

Separation of proteins from a complex mixture has traditionally been performed by utilising chromatographic techniques or gel electrophoresis techniques. Traditional gel electrophoresis techniques are however time and labour consuming and may involve limitations with respect to resolution.

pH gradients in gels have e.g. been provided for polyacrylamide matrices as described in WO 93/11174 and WO 97/16462.

Since 1975, complex mixtures of proteins have generally been separated by means of two dimensional gel electrophoresis in which the physical separation of the proteins in the first dimension gel is based upon a separation according to the isoelectric point of each of the proteins to be analysed. This is referred to as isoelectric focussing (IEF) of the proteins. (See e.g. O'Farrell PH. High resolution two-dimensional electrophoresis of proteins. JBiol Chem. 1975 May 25;250(10):4007-21).

However, a single IEF gel cannot resolve all of the proteins present in a single cell type since there are typically more than 20,000 different proteins in a cell. Therefore many investigators who want to study and identify some or all of the proteins expressed in a cell (proteomics) have used a second 'dimension' - a second gel wherein the proteins are separated at right angles to the first IEF gel, where the proteins are separated based on differences of their respective molecular weight. This is called two-dimensional gel electrophoresis (2DGE).

The objective of the invention is to provide an alternative method of separating biocomponents such as biomolecules, by use of which a high resolution can be obtained.

Another objective is to provide a method of separating biocomponents such as biomolecules which can be used for separating biocomponents e.g. proteins from compositions comprising a large amount of different biocomponents e.g. above 5,000, or above 10,000 or even above 15,000 different biocomponents.

Yet another objective is to provide a method of separating and optionally identifying biocomponents which is relatively simple and easy to carry out, and which is preferably highly reproducible.

A further objective of the invention is to provide a method of separating biocomponents by use of which a high resolution can be obtained, and which process is labour-saving compared to known processes.

It is also an objective of the invention to provide a separation system allowing a high degree of flexibility for carrying out the method.

Finally it is an objective to provide a separation unit for use in the method.

These and other objectives have been achieved by the invention as defined in the claims.

### Disclosure of the invention

The idea behind the invention is to separate the biocomponents contained in a liquid into to or more fractions, where the fractions may be further separated. The method according to the invention may thereby be used in a very flexible manner where it is possible to obtain and optionally separate the desired fraction or fractions, until the desired degree of separation is achieved.

In the following the term 'biomolecules' is intended to include components of biological origin, such as human origin or synthetic components resembling these. The biocomponent may e.g. include biomolecules, tissues, cells, body fluids, blood components, microorganism, and derivatives thereof, or parts thereof as well as any other biocomponent.

The biocomponent may include one or more biomolecules of microbial, plant, animal or human origin or synthetic molecules resembling them. The biocomponent or components may preferably be of human origin or synthetic molecules resembling them.

Basically the method is particularly useful for the separation of biomolecules such as proteins, glyco proteins, nucleic acids, such as RNA, DNA, cDNA, LNA, PNA, oligonucleotides, peptides, hormones, antigen, antibodies, lipids and complexes including one or more of these molecules, said biomolecule preferably being selected from the group consisting of proteins and protein complexes.

Particularly relevant examples of biomolecules are proteins, peptides and protein complexes. Protein complexes include any chemical substances wherein at least one protein is linked, e.g. linked by ionic links or Van der Waals forces. The protein complexes may e.g. include at least 10 % by weight of the protein.

The proteins include denatured, partly denatured and non-denatured proteins. The denaturation degree depends on the substrate, the composition forming the separating coating, the structure of the separating coating, and the composition and or structure gradient of the separation coating if this coating comprises such gradient or gradients on the substrate. The denaturation degree also depends on the liquid comprising the proteins.

Thus in some of the embodiments, non-denatured proteins can be separated, because the biomolecules are adsorbed to (and are mobile on) the separation layer. This provides the further advantage that separated proteins or other biocomponents can be tested directly for biological activity without the need for an isolation and optional re-folding step.

The method is particularly useful for the separation of nucleic acids, proteins and parts thereof (mono-, di- and polypeptides and mono-, di- and polynucleotides), and complexes including nucleic acids and proteins.

The biocomponents to be separated may include a mixture of different types of biocomponents e.g. a mixture of proteins and nucleic acids.

The biocomponents to be separated are contained in a liquid as described further below.

The biocomponents are separated from each other by using the differences in isoelectric points (pI values) of the biocomponents. In order to obtain a separation it is thus necessary that the biocomponents include at least two biocomponents having different pI values.

According to the method of the invention the biocomponents are separated on one or more separating paths.

The term "separating path" means a path in the form of a separating coating carried on a substrate, wherein said separating coating comprises one or more separating layers, at least one separating layer consisting of or comprising one or more pH active components comprising pH active groups defined as chemical groups that are capable of being protonated or deprotonated in aqueous environments.

The separating path may have any length and any distance e.g. as described further below.

The method according to the invention comprises the steps of
i. providing a first separating path in the form of a separating coating carried on a substrate, wherein said separating coating comprises one or more separating layers, at least one separating layer consisting of or comprising one or more pH active components comprising pH active groups defined as chemical groups that are capable of being protonated or deprotonated in aqueous environments,
ii. applying the liquid with the biocomponents to the separating coating,
iii. applying a voltage over the separating path by applying a positive electrode and a negative electrode in contact with the separating coating at a distance from each other along the separating path,
iv. allowing at least some of the biocomponents to travel towards one of the electrodes to one or more collection stations,
v. collecting the once separated biocomponents from at least one collection station.

The area closer to the negative electrode is designated the negative end of the separating path and the area closer to the positive electrode is designated the positive end of the separating path.

It is in one embodiment desired to select the separating path so that the separating coating on the separating path includes a pH value provided by said pH active group, which pH value is lower than one or more of the pI values of the biocomponents and higher than one or more of the pI values of the other biocomponents. In this embodiment the separating coating may preferably have a pH value provided by the pH active group, which pH value is at least 0.1, such as at least 0.5, or such as at least 1 pH unit lower than one or more of the pI value of the biocomponents and at least 0.1, such as at least 0.5, or such as at least 1 pH unit higher than the pI value of the other biocomponents.

The greater the difference between the pH value of the separating coating and the pI value of the specific biocomponents, the faster the separation will be performed. The speed of the separation may naturally also be adjusted by the electrical field applied over the electrodes.

The pH value may be essentially constant over the path or it may vary continuously and/or stepwise.

In one embodiment the separating coating has a pH value which varies less than 1 pH unit, such as less than 0.5 pH unit or even less than 0.1 unit along the separating path.

In another embodiment the separating coating has a pH value which comprises a pH gradient along the separating path, said gradient being continuously or stepwise along the separating path. In one embodiment it is desired that the pH gradient includes a pH variation of up to about 8 pH values, more preferably between 0.1 and 5 pH units, such as between 0.5 and 3 units along the separating path. By using such path in the method, part of the biocomponents may be separated along the path, whereas other parts may be obtained as fractions.

Any type of separating path can in principle be used in the method e.g. separating path of gelled material e.g. as disclosed in WO 93/11174 and WO 97/16462, and WO 00/56792, which are hereby incorporated by reference or in the form of strips with a separating coating e.g. as disclosed in PCT/DK01/00689, which is hereby incorporated by reference.

The separate biocomponents are separated into one or more fractions collected in collection stations.

In one embodiment, the separating path comprises two collection stations, one collection station designated the high pH collecting station placed closer to the negative electrode than the other collection station designated the low pH collecting station. The method comprises the step of collecting the biocomponents from one or both of the collecting stations. The collected biocomponents may preferably be subjected to a further separation, preferably using another separating path with pH active components.

In one embodiment the collected, once separated biocomponents are subjected to further separation by applying the biocomponents in a liquid onto a second separating path in the form of a separating coating carried on a substrate, wherein the separating coating comprises one or more separating layers, at least one separating layer consisting of or comprising one or more pH active components comprising pH active groups. The pH value or the range of pH values of the separating coating of the second separating path may preferably be different from the pH value or the range of pH values of the separating coating of the first separating path.

The separation over the second path may be performed as over the first path, e.g. by applying a voltage over the second separating path by applying a positive electrode and a negative electrode in contact with the separating coating at a distance from each other along the separating path, at least some of the biocomponents being allowed to travel towards one of the electrodes to one or more collection stations.

Additional steps of separation may be provided so as to make a cascade of separation steps, whereby the fraction or fractions obtained in each stem are a fraction of biocomponents with pI values within smaller and smaller intervals.

In one embodiment of the method according to the invention the biocomponent is separated on 3 or more separating paths, such as between 4 and 300, such as up to 264, such as up to 200 separating paths. The number of separating paths depends on the type of biocomponent mixture to be separated and the desired resolution. The separation could in principle be continued until all different biocomponents with different pI values are separated from each other. In many situation, however, it is desired to have a first preliminary sorting into two or more fractions, whereafter one or more of these fractions are subjected to further separation. The number of separating paths for use in the method may thus in principle be as high as the number of different biocomponents in the mixture of biocomponents.

Each separation should preferably comprise at least one collection station, such as two collection stations, one collection station designated the high pH collecting station placed closer to the negative electrode than the other collection station designated the low pH collecting station. The separating paths are in the form of separating coatings carried on substrates, wherein each separating coating independent of each other comprises one or more separating layers, at least one separating layer of each separating coating consisting of or comprising one or more pH active components comprising pH active groups. The pH value or the range of pH values of at least two, preferably at least 3, such as 4, 5, 6, 7, 8, 9, 10 or even more of the separating coatings of the respective separating paths are different from each other, whereby it is possible to perform a cascade of separation steps.

In one embodiment the separating path comprises more than two collection stations, e.g. 3 collection stations placed along the separating path.

The separating path may e.g. comprise two or more path sections along the separating path, wherein said separating path sections comprises separating coatings with different pH values, the difference in pH value of the separating coatings between two adjacent separating path sections preferably being in the interval between 0.5 and 4 pH unit, such as between 1 and 2 pH values. In this embodiment it is particularly useful to provide a collection station at the border line between to separating sections. Biocomponents comprising pI value between the pH value of the two adjacent separating sections may thereby be collected at a collection station placed on the border line.

In one embodiment of the method according to the invention the biocomponents are separated on a plurality of separating paths, each separating path comprising two collection stations, one collection station designated the high pH collecting station placed closer to the negative electrode than the other collection station designated the low pH collecting station, said separating paths being in the form of separating coatings carried on substrates, wherein each separating coating independent of each other comprises one or more separating layers, at least one separating layer of each separating coating consisting of or comprising one or more pH active components comprising pH active groups, the pH value or the range of pH values of at least two, preferably at least 3, such as 4, 5, 6, 7, 8, 9, 10 or even more of the separating coatings of the respective separating paths being different from each other.

The method may preferably comprise applying the biocomponents in a liquid to a first separating path, applying a voltage over the electrodes at the negative and the positive end of the separating path, allowing at least some of the biocomponents to travel towards one of the electrodes to one of the collection stations, collecting the biocomponents from at least one of the high pH and low pH collection stations, performing further separations using further separating paths by applying voltage and collecting the biocomponents from a collecting station, if the collection station is a low pH collection station, subjecting the collected biocomponents to a further separation using a separating path having a separation composition with a lower pH or range of pH value than the previously used separating path, if the collection station is a high pH collection station, subjecting the collected biocomponents to a further separation using a separating path having a separation composition with a higher pH or range of pH value than the previously used separating path. n may be any integer, e.g. up to about 500, such as up to about 200, e.g. between 2 and 100.

From the above, it should be clear that the method may be used in a very flexible manner.

In one embodiment according to the invention the method comprises the steps of
- separating the biocomponents on a first separating path having a first pH value, and collecting the biocomponents from a low pH collecting station closer to the positive electrode than to the negative electrode,
- separating the biocomponents on a second separating path having a second pH value lower than the first pH value,
- and collecting the biocomponents from a high pH collecting station closer to the negative electrode than to the positive electrode, to thereby collect the biocomponents having a pI value between the first and the second pH value.

The collected biocomponents may be subjected to further separation e.g. by repeating the separating step using a separating path with a different pH value.

In one embodiment according to the invention the method comprises the steps of
- separating the biocomponents on a first separating path having a first pH value, and collecting the biocomponents from a high pH collecting station closer to the negative electrode than to the positive electrode,
- separating the biocomponents on a second separating path having a second pH value higher than the first pH value,
- and collecting the biocomponents from a low pH collecting station closer to the positive electrode than to the negative electrode, to thereby collect the biocomponents having a pI value between the first and the second pH value.

The collected biocomponents may be subjected to further separation e.g. by repeating the separating step using a separating path with a different pH value.

In one embodiment according to the invention the method comprises the steps of
- separating the biocomponents on a separating path comprising 2 or more separating path sections along the separating path, said separating path sections comprising separating coatings with a first and a second pH value which differs from each other, said separating path comprising a section collection station at the border between the separating path sections, and
- collecting the biocomponents from said section collection station, to thereby collect the biocomponents having a pI value between the first and the second pH value.

The collected biocomponents may be subjected to further separation e.g. by repeating the separating step using a separating path with a different pH value.

The above described steps of separation may be combined in any way e.g. as illustrated in the figures described later on.

The biocomponents to be separated should be contained in a liquid so as to facilitate the distribution of the biocomponents onto the substrate. Thus, the biocomponents will be prepared as a sample either dissolved or dispersed in a liquid.

The liquid may be of the type normally used as working liquids in gel separations and in other handling of biocomponents. Liquids for such use are generally known in the art, and the skilled person will by use of his general common knowledge be able to select a suitable liquid for the respective biocomponents or combinations of biocomponents. Water, mixtures of water, salts and/or organic constituents e.g. water miscible organic solvents are normally used for this purpose. The biocomponents may also be dispersed or dissolved in human liquid, such as serum.

The actual process of preparing the sample varies from sample type to sample type, i.e. according to the source and properties of the biocomponents. The different sample preparation processes do not only differ depending upon the type of source and biocomponents, but also with respect to the subset of biomolecules (e.g. protein/protein complex) which it is desirable to separate and/or isolate. Obviously, the sample preparation will be adjusted according to parameters known to the person skilled in the art.

The liquid should thus preferably be a solvent or a dispersion of the biocomponents such as an organic or an aqueous solvent. In most situations it is preferred that the liquid comprises at least 25 % by vol. of water, more preferably comprising at least about 45 % by vol. of water. The liquid or solvent may further comprise other components such as acetic acid, ethanol, glycerol, detergents such as CHAPS (3-[(3-cholamidopropyl)-dimethylammonio]-1-propanesulfonate (detergent)) and SDS (Sodium Dodecyl Sulphate (charged detergent)) and buffer systems e.g. comprising one or more components e.g. including chaotopic agents, such as for example of the following components:β-mercaptoethanol, urea, thiourea, guanidinium chloride and DTT )

One example of a simple preparation methodology useful where the source of the biocomponents (here: proteins/protein complexes) is cells from a culture is simply to remove the culture medium that the cells have been growing in and add a "lysis buffer" (e.g. about 7 M urea, about 2 M thiourea, about 2% CHAPS about 0.5% DTT, about 2% pharmalytes).

Two other applicable types of buffers are: (a) about 50% ethanol, about 1% acetic acid, about 49% water (as an organic solvent) which is particularly useful for hydrophobic proteins; and (b) about 10% glycerol, about 2% SDS, about 60 mM Tris HCl pH 6.8, about 5% β-mercaptoethanol (as the classical sample buffer for one dimensional separation of proteins in a gel) which is particularly useful for larger proteins (and to some extent also for hydrophobic proteins).

The above three buffers may cover a broad range of biocomponents, but alternatives and modifications will be recognisable for the person skilled in the art. The biocomponents are typically present in the liquid as a mixture of numerous individual types of biocomponents. The process of the invention is intended for the isolation of all or just a selection of those biocomponents and/or for the spatial separation of the individual biocomponents on the layer/gradient surface of the sheet-like substrate. The separation is essentially independent of the relative concentrations of the biocomponents in the liquid.

The sample to be separated may contain between 2 and 150.00 biocomponents or even more. Dependent on the type and combination of biocomponents it may be possible to obtain a separation of 5,000, 10,000, 100,000, 150,000 or even more different biocomponents.

The liquid containing the biocomponents may in principle contain as many biocomponents as possible, provided that the biocomponents are not dried. Generally used biocomponent concentrations are between 1-20 **µ**g/**µ**l, such as between 5 and 10 **µ**g/**µ**l. In case of proteins or protein complexes the concentration may preferably be between 7-9 **µ**g/**µ**l, whereas in case of DNA the concentration could be between 9-11 **µ**g/**µ**l. During the step of separation the concentration will be reduced. In order to obtain an optimal resolution the concentration of the biocomponent may preferably be even less than indicated above, e.g. between 0.1 and 5 **µ**g/**µ**l, such as about 2, 3 or 4 **µ**g/**µ**l.

In one embodiment the concentration of biocomponent is relatively low e.g. below 3 µg/l, such as between 0.01 and 2 µg/l. Such relative low concentration is particularly desired when the biocomponent is fed to the separating path or paths in a continuos manner i.e. during the separation.

The biocomponent may be labelled such as it is generally known to label biocomponents such as biomolecules e.g. proteins. The labelling may e.g. include radioactive labelling, fluorescence labelling and other e.g. chemicals with various groups which could act as handles or functional groups for subsequent processes.

Further information concerning the method of preparing the biocomponents and the liquid with the biocomponents may be found in US 5264101, which is hereby incorporated by reference.

The biocomponent may be applied to the path by any method. The desired method depends inter alia on the type of separating coating, and the type of biocomponent.

The biocomponent may thus be applied onto or into all of the separating coating, or it may be applied on a local area of the path.

It should be observed that in order to provide a current through the separating coating to thereby separate the biocomponents, the separating coating should be moistured by a current carrying liquid such a liquid containing water. If the biocomponents contained in a liquid are added locally, the remaining part of the path should preferably be moistured e.g. by applying an aqueous liquid. If the separating coating is a gel, the moisture contained in the gel may be sufficient.

In one embodiment the biocomponents contained in the liquid are applied onto a separating path by loading the liquid with the biocomponents onto a local area of the separating path, such as an area comprising between 1 and 25 % of the separating path area, such as between 2 and 10 % of the separating path area.

In another embodiment the biocomponents contained in the liquid are applied onto a separating path by loading the liquid with the biocomponents onto at least 50 % of the area of the surface of the separating coating of the separating path, such as an area comprising between 60 and 100 % of the surface of the separating coating of the separating path, such as between 75 and 90 % of the surface area of the separating coating of the separating path.

The liquid comprising the biocomponents may in one embodiment be contacted with the surface separation coating by applying the liquid to the separating path e.g. for a period sufficiently long for the biocomponents to become adsorbed to the substrate and/or the surface separation layer. The liquid may be applied directly to the surface separation layer on the substrate or it may be applied to the substrate which transfers it to the surface separation layer.

The time necessary for the biocomponents to become absorbed to the separating path is given by thermodynamic parameters, but will mostly depend on how the liquid is distributed on or applied to the separating unit and the nature of the substrate and the liquid (e.g. viscosity).

Where the liquid is added on only part of the separating path, it is desired that the separating unit is wetted prior to applying a voltage over it, because applying voltage over a dry separating unit may result in burning of the separating unit.

The separating path may e.g. be wetted with a liquid prior to the application of the liquid containing the biocomponent. This aspect is particularly relevant if the substrate is capable of absorbing or swelling liquid as this absorption or swelling may provide conductivity through the substrate and may decrease the necessary amount of sample.

The voltage applied over a separating path may e.g. be up to about 75.000 V/m, such as between 10 and 50.000 V/m. As an example, a voltage over a path may be applied, preferably via clamps near the longitudinal ends of the separating path. The equipment for applying a voltage over the separating unit may be similar to that used for gel electrophoresis. A voltage of up to 50,000 V/m or even more. Typically, up to about 20,000, 10,000, 5,000 or 3,000 V/m may be applicable to separate biocomponents, such as proteins. The longer the separating unit, the longer run times will be needed, thus, for separating unit having a length in the order of meters, a run time in the order of hours or even days may be necessary, however when using a plurality of shorter "strips" which all in all cover the relevant pH gradient range, the operation time may be reduced considerably.

Illustrative conditions for application of a voltage over a separating unit can be similar to those described in the manual for the commercially available "Multiphore" product ("Multiphor II Electrophoresis System" from Amersham Pharmacia Biotech AB). The voltage may e.g. be applied to the separating path using electrode wicks e.g. IEF electrode wicks from Amersham Pharmacia Biotech AB. such wichs may e.g. constitute the collection station as described below.

The running conditions can of course be further optimised with due consideration to the separating properties of the separating path e.g. as described in Danish patent application PA 2002 00539 DK, which is hereby incorporated by reference.

In one embodiment, the air above the path is kept free of oxygen or CO₂ e.g. by blowing with nitrogen. The presence of oxygen or CO₂ may preferably be avoided since these may react with the substrate, the liquid or the biocomponents. By blowing nitrogen, a cooling of the substrate may also be achieved.

The separating path may e.g. be temperature regulated, e.g. to a temperature between 5-60 °C, such as about 20°C. This may be carried out using any method e.g. by placing them on a plate through which water is circulated at the desired temperature. Other desired methods include applying a carrier with the separating unit or the separating unit directly, particularly if the separating unit is non-absorbing onto a cooling plate. The above described "Multiphore" product ("Multiphor II Electrophoresis System" from Amersham Pharmacia Biotech AB) also include a cooling plate.

The cooling should be performed without evaporating too much liquid from the sample, and generally if blow-cooling is used, the gas or air should have a high moisture level such as above 80 % of saturation. To avoid extensive evaporation of the liquid of the sample the substrate or the carrier with the substrate may be placed in a closed or partly closed chamber with a 'humidification' water bath.

The application of voltage may result in an increased heat generation, in particular if the voltage is increased quickly. In order to optimise and regulate the cooling the voltage may preferably be raised stepwise or continuously over a period of from 5 minutes to 2 or 3 hours. This may also result in a desalting of the liquid, which may further reduce the generation of heat, in particular for samples containing components which could form urea such a basic proteins due to avoidance of break down of urea into cyanate ions which occurs at high temperature or highly basic conditions or both. These features may be significant for obtaining a far better focussing and a substantial improvement of the reproducibility of the quantitative data.

In one embodiment where the voltage applied is a pulsating voltage, such as a voltage shifting between an ordinary direction to a reversed direction, the designation of positive and negative electrode is determined with respect to the situation where the voltage has ordinary direction, the total electrical power in the reversed direction being less such as at least 5 %, such as at least 50 % than the electrical power in the ordinary direction. In most situations the voltage is applied in the reversed direction for less than 10 % such as less than 5 % of the time. In one embodiment the voltage is applied in the reversed direction as short pules e.g. of up to 5 second. By the reversed pulsating, biomolecules may be pulled of from undesired adherence to the path.

In some situations it will be desired to add additional liquid to the biocomponents during the separation. The additional liquid may in principle be added anywhere e.g. at the one or more collection stations.

The separated biocomponents are collected at one or more collection stations.

A collection may in one embodiment be in the form of a collecting unit comprising a collecting space e.g. in the form of a porous material, a collecting chamber or collecting cavity.

In one embodiment the method comprises the step of removing the collecting unit comprising collected biocomponents from one separation path after separation on said separating path, and applying the collected biocomponents onto another separating path, e.g. by applying the collecting unit onto the separating path, by applying additional liquid to the collecting unit and letting it pass onto the separating path, and/or by squeezing the collecting unit and applying the squeezed out liquid with biocomponents onto the separating path.

In one embodiment the collection station or stations are in the form of an opening in or an overflow edge of the separating path. Two or more separating paths may e.g. be connected so that the collected biocomponents flow via the opening or overflow edge of the separating path to another separating path, optionally via a pipe comprising a vent for controlling the feeding of liquid with biocomponents onto the other separating path. An electrical field may be applied for driving the biocomponents from one separating path to another separating path.

The electrical fields may be applied over the path one by one or over two or more paths simultaneously. By a simultaneous application the separation may be carried out in a continuos manner.

In one embodiment according to the method of the invention at least one collection station is in the form of an opening in or an overflow edge of the separating path, said collected biocomponents flowing via the opening or overflow edge of the separating path to a collecting unit comprising a collecting space e.g. in the form of a porous material, a collecting chamber or collecting cavity.

The collecting unit e.g. comprising a porous material, a collecting chamber or collecting cavity may be placed in direct contact with another separating path.

The separating time defined as the time of applying and holding a voltage over a separating path after at least some of the biocomponents have been applied, is sufficient for obtaining a separation of the biocomponents to thereby collect separated biocomponents from at least one collection station.

In practice the separating time may vary largely depending on the path, the biocomponents and the voltage applied.

The separation may e.g. be between 1 second and 73 hours, such as between 1 minute and 24 hours.

In situations where the path is relatively short the separating time may also be short. Higher voltage may also provide a shorter separation time, but care should be taking that the high voltage does not destroy the biocomponents. Finally the greater the difference between the pH of the separating coating and the pI of the biocomponents, the shorter the separating time.

In one embodiment the biocomponents are separated in a cascade separating system comprising a step of fractionating the biocomponent into two fractions, one having pI values above X and one having pI values below X. The two fractions are further separated into two fractions respectively, which fractions are further separated into two fractions and so on until the desired number of fractions is obtained.

The invention also relates to a separating system for use in the separation of biocomponents contained in a liquid.

The biocomponents and the liquid may be as described above.

The separating system comprises 2 or more separating paths, the separating coating of each of said separating paths comprising one or more separating layers, at least one separating layer consisting of or comprising one or more pH active components comprising pH active groups defined as chemical groups that are capable of being protonated or deprotonated in aqueous environments, the pH active groups providing the separating coating with a pH value along the separating path, the separating system comprising 2 or more separating paths that differ from each other with respect to the pH value of the separating coating.

The separating system comprises a set of separating paths, each in the form of a separating coating carried on a substrate.

The substrate may in principle have any shape and be of any material. The substrate may be porous or non porous.

In situation where the substrate is non-porous or where the outermost layer of the substrate is non-porous the separating coating may be carried on the outer surface area. In this application non-porous means that the substrate does not have at least 0.1 % by vol. of open pores, e.g. measured by allowing the substrate to soak in water with a surface tension about 30 dyn/cm for 30 minutes.

In one embodiment the separating coating is carried on the outer surface of a substrate.

The term "outer surface" does not include the surface of the internal pores.

In situations where the substrate has pores, such as a foam or a woven or non-woven fiber material, the surface includes the internal surface of the pores. When measuring the thickness of the separating coating/layer on a porous substrate, the thickness is measured as the thickness on the individual wall parts of the pores in case of foam, and in case of fibres, the thickness is measured on the individual fibres.

The substrate may in principle have any shape e.g. in the form of a sheet-like substrate having a shape as described in PCT/DK01/00689, which is hereby incorporated by reference.

The substrate includes any substrate having a 3-dimentional shape, length, thickness and width, wherein the substrate in at least one of its dimensions, designated the length and measured at its longest point, is more than, preferably more than 10 times, more preferably more than 100 times its shortest dimension, designated its thickness and measured in its shortest point. Preferably the substrate in its dimension designated its thickness and measured at its shortest point is less than 0.5 times its other 2 dimensions measured at their longest points, preferably less than 0.1 times its other 2 dimensions. The substrate may e.g. be a sheet-like substrate including i.e. tapes, bands, strips, felts, sheets, non-woven structures, woven structures, membranes, films, plates, etc. having regular or irregular dimensions.

In one embodiment the length of the substrate is about 100 mm or less, such as less than 10 mm or even 1 mm or. In another embodiment the length of the substrate is above 100 mm, such as 250 mm or longer, or even 500 mm or longer, e.g. about 1 or 2 meters.

In one particularly interesting embodiment, the sheet-like substrate is a tape roll, which can have a length of up to several meters. The sheet-like substrate may also include a hollow pipe with an innercircle surface and an outercircle surface or be in the form of a cord or a bundle of cords. The innercircle surface means the outer surface area of the surface inside the pipe, and the outer circle surface means the outer surface area on the outerside of the pipe.

In one embodiment, the width and the thickness of the substrate in the form of a tape, a cord or a bundle of cords are of about the same order of magnitude. As an example, the thickness may be in the range of 10-200 µm whereas the width may be in the range of 1-300 mm.

In one specific embodiment, the sheet-like substrate is in the form of a three dimensional unit, wherein one dimension designated the length is more than 2 times, preferably more than 5 times and even more preferably more than 10 times longer than the longest of the other two dimensions. The length may e.g. be between 1 mm and 200 cm, e. g. at least 10 cm such as 25 or 50 cm, or at least 100.

In one embodiment the shortest dimension designating the thickness is between 1 µm and 10 mm, more preferably between 10 and 200 **µ**m. The dimension designating the width may preferably be between 1 µm and 1000 mm, more preferably between 3 and 300 mm.

In one embodiment, the substrate is in the form of a cord, said cord preferably having a round or angular cross-section, such as triangular or rectangular, the cord comprising a coating i.e. a separation layer on its surface extending along the whole or part of the length of the cord. Preferably the cord has a substantially circular cross-section with a diameter of 0,1-10 mm, e.g. between 1 and 4 mm.

In the embodiment where the substrate is in the form of a hollow pipe, it is preferred that the innercircle surface of the hollow pipe is coated with the separating coating, however the outercircle surface or parts of the outercircle surface of the hollow pipe may also or alternatively be coated with the separating coating. In one embodiment also internal surfaces is coated with the separating coating.

The substrate may in principle be of any material e.g. it may be of materials capable of absorbing liquid or it may be non-adsorbing e.g. in the form of non-porous glass. Absorbing substrates include non-porous substrates wherein the liquid is capable of migrating into and optionally be chemically bonded in the material, and porous substrates such as non-woven felts where the liquid is absorbed into the capillaries of the materials. In both situations it may be desired to wet the substrate with a liquid prior to the application. Thus it is possible to use a smaller amount of liquid with biocomponents. Thereby non-specific bonding to molecules or components may also be reduced.

In one embodiment of the invention, substrates that absorb large amounts of liquid i.e. such as 100 % of the weight of the substrate or more due to migration into and optionally chemical binding of the liquid in the material are avoided, because this bonding of water may disturb the separation, and furthermore the liquid may be drained from the sample comprising the biocomponents to be separated.

In one embodiment the substrate material may preferably be selected from the group consisting of woven and non-woven materials such as felt, paper and textile. The substrate should in general not be soluble in water.

In one embodiment the substrate is sufficiently strong so that it can withstand ordinary handling without breaking. In one embodiment, the substrate is selected to be at least so strong that the substrate in water saturated condition is capable of carrying a load in its length direction of at least 0.1 kg, such as 0.2, 0.5 or even 1 kg for 1 minute without bursting.

In another embodiment the separating unit is sufficiently strong to withstand ordinary handling without breaking. In one embodiment, the substrate is selected to be at least so strong that the separating unit in water saturated condition is capable of carrying a load in its length direction of at least 0.1 kg, such as 0.2, 0.5 or even 1 kg for 1 minute without bursting.

The substrate may be a non-layered or a layered material comprising layers of one or more materials, such as materials mentioned in the following. Useful materials include glass, glass-fiber based materials, metals, solid or foamed polymers, non-woven or woven polymers, paper, fibres, such as carbon fibres; aramide fibres; fibre reinforced materials; ceramics; or mixtures or combinations thereof.

The polymer materials may include one or more polymers selected from the group consisting of polyolefins including polyethylene (PE) and polypropylene (PP); polyesters; polytetrafluoroethylene (PTFE); tetra-fluoroethylene-hexafluoropropylen-copolymers (FEP); polyvinyl-difluoride (PVDF); polyamides; polyvinylchloride (PVC), rubbers such as silicon rubbers and mixtures thereof.

Generally it is preferred to use non-woven felt made from polymer fibres. This is in the following referred to as felt.

The purpose of the substrate is in general to support the separating coating, which may be relatively thin, e.g. less than 10 µm and therefore not sufficiently strong to be manually handled without the supporting substrate.

In one embodiment, the substrate furthermore has the purpose of spreading the liquid comprising the biocomponents to be separated. For this purpose the material may include pores or openings which allow liquid to pass through the material in a direction parallel to the separating coating. The material may include pores or openings which provide the substrate with a capillary effect to liquid, such as water.

In one embodiment the substrate constitutes the substrate for two or more paths. The substrate may e.g. be in the form of a plate of a material with channels for the path. The channels may be partly or totally closed channel. The channels with paths may be directly connected to each other or they may be connected via connecting channels.

In one embodiment the separating system further comprises one or more pairs of electrodes, each comprising a positive electrode and a negative electrode. The pair of electrodes is in contact with or capable of being brought into contact with the separating coating at a distance from each other along a separating path.

In one embodiment the separating system comprises separating paths and pairs of electrodes, each separating path comprising a separating coating and a pair of electrodes in or adapted to be in contact with the separating coating at a distance from each other along the separating path.

In one embodiment the separating system comprises less pairs of electrodes less than the number of separating units. The electrodes are applied to the path one by one as the separation takes place.

In another embodiment the separating system comprises separating paths that are connected to each other, e.g. by having common substrate. Each path comprises a pair of electrodes. The pairs of electrodes may e.g. be connected to each other so that the positive electrode is connected and the negative electrode is connected. The electrode further comprise a connecting unit for being connected to a power supply.

The electrode may in principle be of any type e.g. as the electrode wicks described above.

In one embodiment of the separating system according to the invention, at least one of the separating paths comprises one, two or more collection stations, preferably two, three or all of the separating paths comprising one, two or more collection stations.

In one embodiment one or more collection stations are in the form of a collecting unit comprising a collecting space e.g. in the form of a porous material, a collecting chamber or collecting cavity.

The collection station may e.g. be in the form of a porous material of a polymer or fiber material. Any foamable polymers may in principle be used for the porous material, but preferably the porous material can be compressed without destruction of the material. In one embodiment the porous material may be conducting. Thereby the collecting station may be used as electrode.

Collection stations in the form of collection chambers or cavities may e.g. be cavities or chambers formed in the substrate material.

In one embodiment according to the invention the at least one collection station is in the form of an opening in or an overflow edge of the separating path. Thereby the separated biocomponent to be collected will drip down from the separating path via the collection station. Therefrom the fractionated biocomponents can be obtained or e.g. be captured onto a further separating path for further separating.

In one embodiment the separating system comprises a guiding channel applied beneath the collecting opening or overflow. The channel optionally comprises a vent. The channel may e.g. terminates above another separating path so that liquid collected at the collection station is guided via the channel onto the other separating path.

In one embodiment of the separating system according to the invention, the at least one collection station is in the form of an opening in or an overflow edge of the separating path, the system further comprising a collecting unit applied beneath the collecting opening or overflow, said collecting unit comprising a collecting space e.g. in the form of a porous material, a collecting chamber or collecting cavity e.g. as described above.

In one embodiment at least one, such as half of or all of the separation paths, each comprise at least two collection stations, said collection stations being in direct contact with the respective electrodes of the pair of electrodes.

The pH value may be essentially constant over the path or it may vary continuously and/or stepwise.

In one embodiment the separating coating has a pH value which varies less than 1 pH unit, such as less than 0.5 pH unit or even less than 0.1 unit along the separating path.

In another embodiment the separating coating has a pH value which comprises a pH gradient along the separating path, said gradient being continuously or stepwise along the separating path. In one embodiment it is desired that the pH gradient includes a pH variation of up to about 8 pH values, more preferably between 0.1 and 5 pH units, such as between 0.5 and 3 units along the separating path. By using a such path in the method a part of the biocomponents may be separated along the path, whereas other part or parts may be obtained as fractions.

In one embodiment it is desired that the pH value or the range of pH values of the separating coating of a first separating path are different from the pH value or the range of pH values of a second separating coating.

The separating system may in one embodiment comprise 3 or more separating paths, such as between 4 and 10 separating paths, each separating path comprising at least one collection station, such as two collection stations, one collection station designated the high pH collecting station placed closer to the negative electrode, or where a negative electrode is adapted to be placed, than the other collection station designated the low pH collecting station, said separating paths being in the form of separating coatings carried on substrates,
wherein each separating coating independent of each other comprises one or more separating layers, at least one separating layer of each separating coatings consisting of or comprising one or more pH active components comprising pH active groups, the pH value or the range of pH values of at least two, preferably at least 3, such as 4, 5, 6, 7, 8, 9, 10 or even more of the separating coating of the respective separating paths being different from each other.

A separating path of the separating system may comprise 3 or more collection stations placed along the separating path. This is particularly useful in situation where the pH value of the path differs along the path e.g. stepwise to form separation sections.

In one embodiment wherein one or more of the separating paths each comprise 2 or more separating path sections along the separating path, said separating path sections differ from each other with respect to pH value, the difference in pH value of the separating coatings between two adjacent separating path sections preferably being in the interval between 0.5 and 4 pH unit, such as between 1 and 2 pH values. In this embodiment a separating path may e.g. comprise a section collection station placed at the border between the separating path sections.

In one embodiment of the separating system according to the invention, the separating system comprises a plurality of separation paths, each separating path comprising two collection stations, one collection station designated the high pH collecting station placed closer to the negative electrode than the other collection station designated the low pH collecting station, said separating paths being in the form of separating coatings carried on substrates, wherein each separating coating independent of each other comprises one or more separating layers, at least one separating layer of each separating coatings consisting of or comprising one or more pH active components comprising pH active groups, the pH value or the range of pH values of at least two, preferably at least 3, such as 4, 5, 6, 7, 8, 9, 10 or even more of the separating coatings of the respective separating paths being different from each other.

The separating coating may be of any pH type separating coatings e.g. as described in WO 93/11174, WO 97/16469, PCT/DK01/00689 and DK PA 2002 00593.

In one embodiment of the separating system according to the invention at least one, such as half of, or all of the separation paths, each have a separating coating comprising a separating layer in the form of a gel. The gel may e.g. be a gel selected from the group consisting of polyamide gels, such as a cross-linked polyacrylamide gel containing sodium dodecylsulfate (SDS), an ampholyte-containing cross-linked gel (IEF), agarose gel, cellulose gel and silica gel.

The method of providing such gel and providing the gels with the desired pH characteristics is generally known in the art, and further reference is made to the prior art publications WO 93/11174, WO 97/16469 and O'Farrell pH. High resolution two-dimensional electrophoresis of proteins. JBiol Chem. 1975 May 25;250(10):4007-21.

In one embodiment of the separating system according to the invention, at least one, such as half of, or all of the separation paths, each have a separating coating comprising one or more separating layers, wherein the pH active components includes components selected from the group consisting of acidic components, such as organic acids including saturated aliphatic monocarboxylic acids having 1-20 carbon atoms, particularly acetic acid, saturated aliphatic dicarboxylic acids having 2-20 carbon atoms, particularly malonic acid, unsaturated aliphatic monocarboxylic acids having 3-20 carbon atoms, particularly acrylic acid; saturated aliphatic monosulphonic acids having 1-20 carbon atoms, particularly methane sulfonic acid; amino acids including aspartic acid and glutamic acid; fatty acids such as saturated or unsaturated monocarboxylic fatty acids having 20-100 carbon atoms, particularly caprylic acid, capric acid and cerotic acid, and di- and poly acids thereof and derivatives thereof.

Such separating coatings may e.g. be provided as described in PCT/DK01/00689 and DK PA 2002 00593.

In one embodiment of the separating system according to the invention, at least one, such as half of, or all of the separation paths, each have a separating coating comprising one or more separating layers, wherein the pH active components include components selected from the group consisting of basic components, such as organic basic including primary amines, secondary amines, tertiary amines, di- and poly functional amines; amino acids including histidine, lysine and arginine, and di- and poly basic thereof and derivatives thereof.

Such separating coatings may e.g. be provided as described in PCT/DK01/00689 and DK PA 2002 00593.

In one embodiment of the separating system according to the invention, at least one, such as half of, or all of the separation paths, each have a separating coating comprising one or more separating layers, wherein the pH active components include components selected from the group consisting of polar components which are non-charged at a pH value about 6, such as amino acids including cystein, asparagine, glutamine, threonine, tyrosine, serine, glycine and di- and polymers thereof and derivatives thereof.

Such separating coatings may e.g. be provided as described in PCT/DK01/00689 and DK PA 2002 00593.

In one embodiment at least one, such as half of, or all of the separation paths comprise a pH gradient in the form of a stepwise or continuously graduating pH value change. In one embodiment at least one, such as half of, or all of the separation paths, each have a separating coating comprising a pH gradient, said pH gradient being provided in the form of a ligand with a pH active component, the gradient preferably being constituted by a change of the number of ligands carrying pH active components.

In one embodiment the separation coatings include one or more of the components selected from the group consisting of acids, such as organic acids, amino acids, fatty acids and poly acids thereof; bases such as organic bases, amino acids and poly bases thereof; aromates such as benzene, naphthalen, anthracene, phenanthrene and substituted compounds thereof; metal components, such a organometals such as alkylmagnesium and lithium tri(tert-butoxy)aluminium hydride; halogen containing compounds such as 1-iod-2-methylpropane, flurocycohexane and methylthicyclohexane; zwitter ions e.g. ampholines; antigens and antibodies.

The separating coating may comprise two or more separating layers, which layers may be similar to each other or may differ from each other with respect to composition and/or structure.

In one embodiment, the separation layer or layers include one or more polymers. The polymers may in principle be any type of polymer e.g. selected from the group consisting of thermoplastics such as thermoplastic elastomers including block copolymer such as SEBS, SBS, SIS, TPE-polyether-amide, TPE-polyether-ester, TPE-urethanes, TPE PP/NBR, TPE-PP/EPDM, TPE-vulcanisates and TPE-PP/IIR; rubbers such as butadiene rubber, isoprene rubber, nitril rubber, styrene-butadiene rubber and urethane rubber; acrylates; polyolefins such as polyethylene, polypropylene and polybutylene including its isomers; liquid crystal polymers; polyesters; polyacrylates; polyethers; polyurethane; thermplastic vulcanisates; and silicone rubber.

The polymer(s) may in themselves comprise the active component or active components may be linked to the polymer(s)or embedded in the polymeric layer or net-work. In one embodiment the separation layer or layers include one or more pH active components, said pH active components being linked to the substrate optionally via one or more linker molecules and/or one or more layers of the separating coating, via a photochemically reactive group, such as a quinone.

The linker molecule may in principle be any molecule or molecules, such as a spacer molecule providing increased distance between the substrate and the quinone. In one embodiment the linker is selected from the group consisting of C₁-C₄₀ alkyl group, e.g. polymethylene, optionally containing aromatic or mono-/polyunsaturated hydrocarbons, polyoxyethylene such as polyethylene glycol, oligo- and polyamides such as poly-β-alanine, polyglycine and polysaccarides.

The quinone may e.g. be selected from the group consisting of anthraquinones, phenanthrenequinones, benzoquinones, naphthoquinones, said quinones preferably being substituted by a functional group selected from the group consisting of carboxylic acids, sulfonic acid derivatives, esters, acid halides, acid hydrazides, semicarbazides, thiosemicarbaxides, nitriles, aldehydes, ketones, alcohols, thioles, disulphides, amines, hydrazines, ethers, epoxides, sulphides, halides and derivatives thereof.

In one embodiment the combination of quinone and pH active component is selected from the group consisting of quinones having the structural formulas I, II, III, IV, V, VI, VII, VIII, IX, X, XI, XII, XIII, XIV, XV, XVI, and XVII

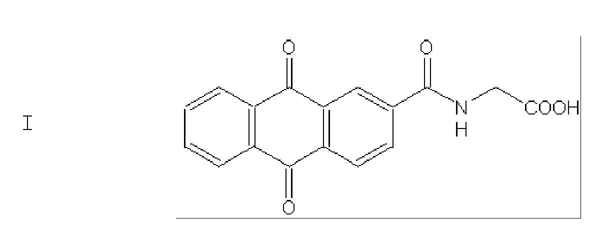

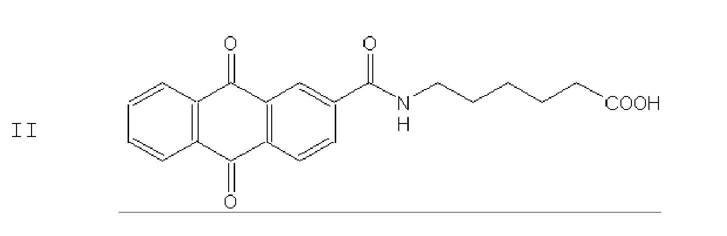

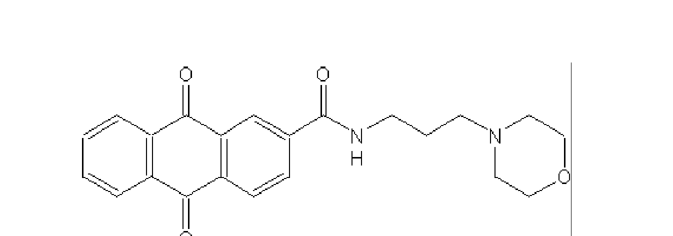

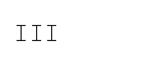

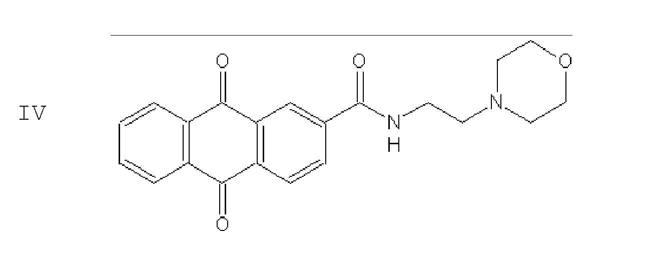

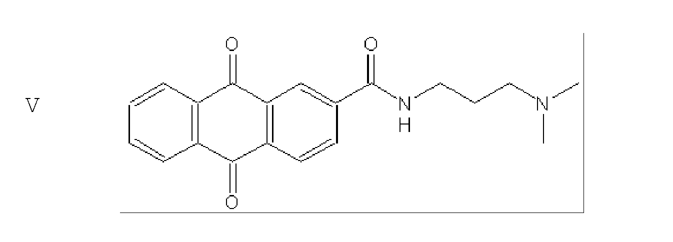

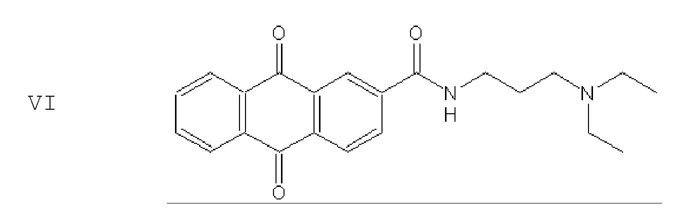

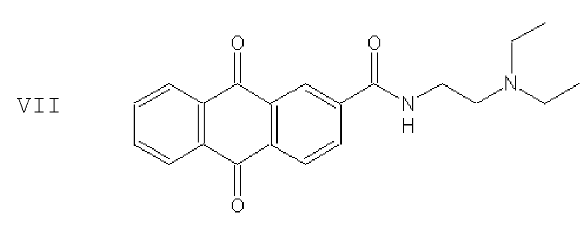

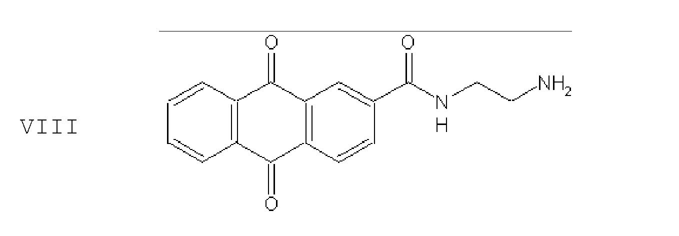

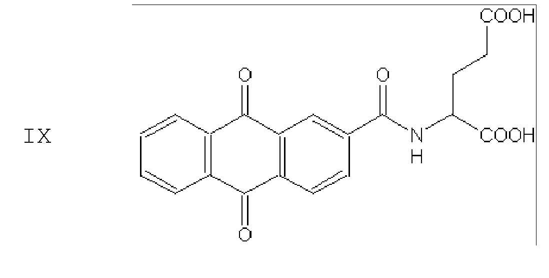

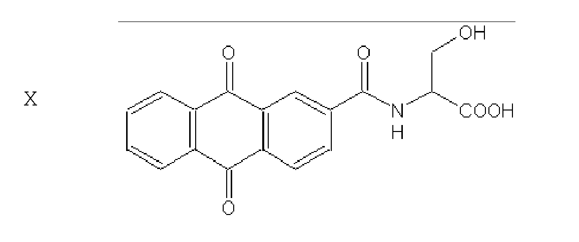

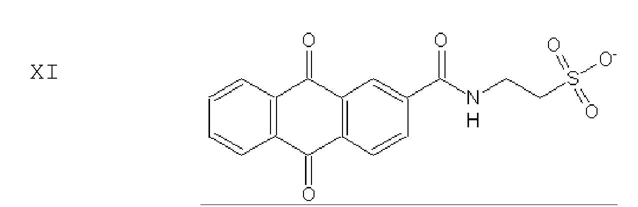

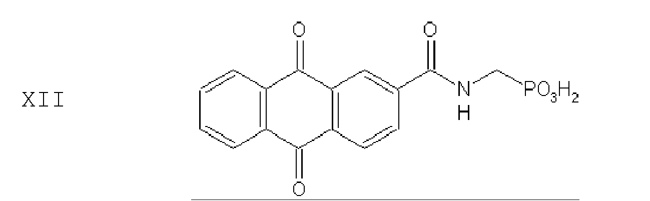

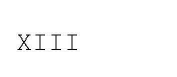

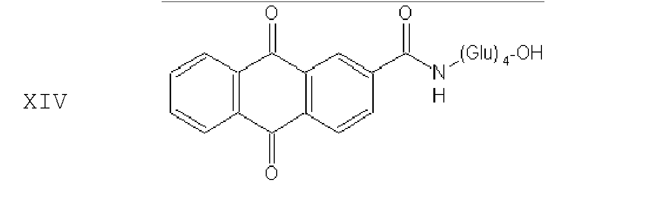

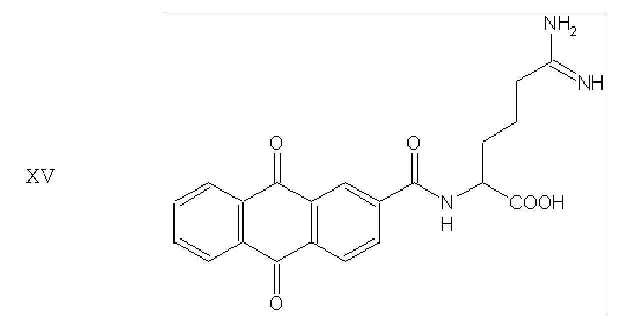

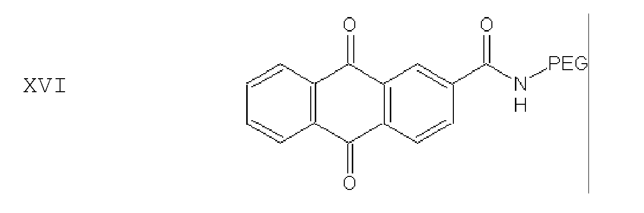

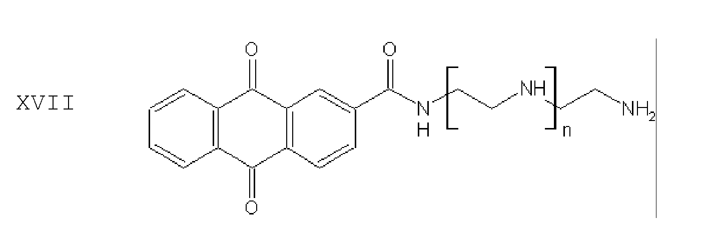

Further information about the production and use of quinones can be found in DK PA 2002 00153 and WO 96/31557, which are hereby incorporated by reference.

In one embodiment the separation layer or layers include one or more pH active components, said pH active components being linked to the substrate by being embedded in a matrix, preferably of a polymeric material, more preferably selected from the group consisting of thermoplastics such as thermoplastic elastomers including block copolymer such as SEBS, SBS, SIS, TPE-polyether-amide, TPE-polyether-ester, TPE-urethanes, TPE PP/NBR, TPE-PP/EPDM, TPE-vulcanisates and TPE-PP/IIR; rubbers such as butadiene rubber, isoprene rubber, nitril rubber, styrene-butadiene rubber and urethane rubber; acrylates; polyolefins such as polyethylene, polypropylene and polybutylene including its isomers; liquid crystal polymers; polyesters; polystyrene; polyacrylates; polyethers; polyurethane; thermplastic vulcanisates; and silicon rubber.

The separating coating may have any thickness. The desired thickness thus varies depending on the type of biocomponent to be separated and the type of separating coating used.

In one embodiment one or more of the separating paths have a separating coating with a thickness of 1, 2, 5, 10 or 50 or even up to about 10,000 molecular layers of the molecules constituting the separating layer.

In one embodiment one or more of the separating paths have a separating coating with a thickness of between 0.01 and 15 **µ**m, such as between 0.5 and 10 **µ**m.

The separating path or paths may comprise a precoating, the separating coating being applied onto said precoating. The precoating may e.g. be applied using CVD.

The separating path or path may further comprise a topcoating, which is applied onto the separating layer or layers. The topcoating should be sufficiently thin so as not to mask the pH active components totally. The topcoating may e.g. be a polyacrylamide.

In one embodiment one or more of the separating paths, such as half of or all of the separating path have a length of between 1 mm and 100 cm, such as between 10 and 500 mm.

The invention also relates to a separating path for use in the separation of biocomponent.

The separating path according to the invention is in the form of a separating coating carried on a substrate, the separating coating comprising one or more separating layers, at least one separating layer consisting of or comprising one or more pH active components comprising pH active groups defined as chemical groups that are capable of being protonated or deprotonated in aqueous environments, the pH active groups providing the separating coating with a pH value along the separating path, the separating path further comprising one or more collection stations, such as two or more collection stations.

The separating, the substrate and the collection stations may be as described above.

The invention also relates to a separating unit for use in the separation of biocomponent contained in a liquid. The separating unit according to the invention comprises a set of separating paths each in the form of a separating coating carried on a substrate. The set of separating paths includes 2 or more separating paths. The separating coating of each of said separating paths comprises one or more separating layers, at least one separating layer consisting of or comprising one or more pH active components comprising pH active groups defined as chemical groups that are capable of being protonated or deprotonated in aqueous environments, the pH active groups providing the separating coatings with pH values along the separating paths. The separating unit comprises 2 or more separating paths that differ from each other with respect to the pH values of the separating coatings. Each of the separating paths comprises one or more collecting stations. The separating path is connected to each other so that liquid can be passed from one collection station of one separating path to the separating coating of another separating path of the unit.

The substrate, the separating coating, and the collection stations are as described above.

In one embodiment, the one or more collection stations are in the form of a collecting unit comprising a collecting space e.g. in the form of a porous material, a collecting chamber or collecting cavity, the collecting unit of one separating path preferably being in contact with the separating coating of another separating path of the unit.

In one embodiment, the one or more collection stations are in the form of an opening in or an overflow edge of the separating path, the opening or overflow edge of one separating path preferably being fixed above the separating coating of another separating path of the separating unit.

In one embodiment, one or more of the separating paths that comprise one or more collection stations in the form of an opening in or an overflow edge of the separating path, further comprise at least one guiding channel beneath one collecting opening or overflow edge, said channel optionally comprising a vent.

In one embodiment, wherein at least one collection station is in the form of an opening in or an overflow edge of a separating path, said separating unit further comprises a collecting unit applied beneath the collecting opening or overflow edge, said collecting unit comprising a collecting space e.g. in the form of a porous material, a collecting chamber or collecting cavity.

In one embodiment, the separating unit comprises a plurality of separating paths, such as more than 3, such as between 4 and 10 separating paths, each separating path comprising a negative and a positive electrode station that either comprises a negative/positive electrode or where a negative/positive electrode is adapted to be placed, each separating path comprising at least one collection station, such as two collection stations, one collection station designated the high pH collecting station placed closer to the negative electrode station than the other collection station designated the low pH collecting station, said separating paths being in the form of separating coatings carried on substrates, wherein each separating coating independent of each other comprises one or more separating layers, at least one separating layer of each separating coating consisting of or comprising one or more pH active components comprising pH active groups, the pH value or the range of pH values of at least two, preferably at least 3, such as 4, 5, 6, 7, 8, 9, 10 or even more of the separating coating of the respective separating path being different from each other.

In this embodiment the selection path may e.g. be connected to each other so that liquid can be passed via the collection stations from one collection station of one separating path to the separating coating of another separating path of the unit, the pH values of the separating coatings of the respective separating paths being selected so that a low pH collection station from one separating path is able to pass liquid with biocomponents onto another separating path with a lower pH value or range of pH values than the separating path from which the liquid with biocomponents was passed, and a high pH collection station from one separating path is able to pass liquid with biocomponents onto another separating path with a higher pH value or range of pH values than the separating path from which the liquid with biocomponents was passed.

As described above the separating paths can be prepared as disclosed in DK PA 2002 00153 e.g. with the further application of the collection stations.

In the following the invention will be described further with reference to the drawings.

### Drawings

Figure 1 is a schematic illustration of the invention.
Figure 2 is another schematic illustration of the invention.
Figure 3 is a schematic illustration of a set-up for the production of a separating unit according to the invention
Figure 4 is another schematic illustration of a set-up for the production of a separating unit according to the invention

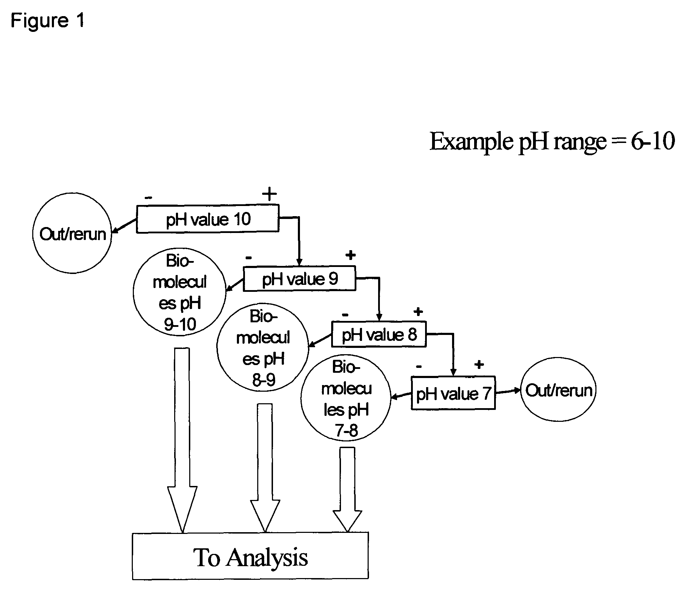

Figure 1 is a schematic illustration of the method according to the invention. In this example a liquid comprising proteins from a cell is applied to a first separating path having a pH value of about 10. An electric field is applied over the path. The proteins having pI values below 10 are collected and separated further on a separating path having a pH value about 9. The fraction of proteins having pI values between 9-and 10 can then be collected at the collection station closest to the cathode. The proteins collected at the collection station closest to the anode are subjected to a further separation on a separating path having a pH value about 8. The separation is repeated until fractions having pI values in the intervals 7-8, 8-9 and 9-10 have been collected. These fraction could e.g. be further separated by using the method of the invention or they could be analysed or further separated by any other method.

Figure 2 is another schematic illustration of the method according to the invention. In this example a liquid comprising proteins from a cell is applied to a first separating path having a pH value of about 7. The proteins are separated into two fractions, one fraction comprising proteins with pI values above 7, collected at the collection station close to the cathode, and one protein fraction comprising the proteins having pI values below 7 collected at the collection station close to the anode. Both of the protein fractions are subjected to a further separation on a path having a pH value about 5.5 and a separating path having a pH value about 8.5 respectively. From each of these separations 2 protein fractions are collected. These collected fractions are subjected to a further separating step to finally result in 8 protein fractions. The fractionation could be continued as long as desired.

Figure 3 shows a useful set-up for the production of a separating unit with a separating layer having a gradient. The set-up comprises a pair of reels 1,2 carrying the substrate whereto the separating coating composition is to be applied. The substrate 6 can be spooled from reel to reel, at a desired speed. A not showed motor is connected to the pair of reels for conducting the spooling. Above the substrate is placed a dispenser in the form of an airbrush 3, two syringes 4,5 e.g. in the form of a dual syringe pump are connected to the dispenser. A gas e.g. in the form of air, N₂ or other is fed to the dispenser 3 as an atomising agent.

The two syringes 4,5 are filled with two different liquid compositions. From the syringes 4,5 the two different liquid compositions are fed to the dispenser. In the present set-up the dispenser 3 also functions as a mixer mixing the two liquid compositions. The two different liquid compositions are fed to the dispenser in a gradually varying amount, so as to provide a gradient on the substrate as the dispenser 3 is dispensing the mixed compositions onto the substrate 6 as the substrate 6 is spooled from one reel to the other reel 1, 2.

After being applied the separating coating composition is solidified as described above.

The set-up shown in figure 4 is similar to the set-up shown in figure 3 except that there is only one single syringe. This set-up thus is particularly useful for the production of separating units with no gradients or with a structure gradient as the amount of separating coating composition applied may be varied along the surface of the substrate. The reference number in figure 4 has the same meaning as the reference number in figure 3.

### EXAMPLES

### Example 1- Manufacturing a separating path with a pH-gradient for separation of proteins

1g Dodecylamine in 100 ml acetone is mixed with 1% UV curing agent (loctite 3201).

1g of Maleic acid in 100 ml acetone is mixed with 1% UV curing agent (loctite 3201).

The solutions are placed in the dosing apparatus (a Hawad syringe pump,) that can be controlled. The dosing from each of the syringes can be varied with time. The two separate flows of material are merged together in a small static mixture, then dosed into the substrate though a needle.

The 30 mm wide VK1100 substrate for the pH -gradient is then wetted with a mixture of acid, base and UV adhesive soluted in the solvent as the substrate at a constant speed passes the premixed mixture flowing out of the needle. The substrate with the solution added then passes an evaporation chamber for evaporation of the acetone and then an UV source for curing. The substrate is re-spooled on a reel pulled by a 24 V DC motor.

If a current of 4,7 V on the 24 V DC motor is applied, a 1 m long gradient is obtained in 120 sek. The flow of the base during the 120 sek. is changed from 160 ml/hour to 0 ml/hour, and the flow of the acid is changed from 0 ml/hour to 160 ml/hour.

In this way a pH gradient is obtained with a starting pH of 10 and an end pH of 2. As the mixture of the acid and base has passed the UV source, the curing agent has fixed the materials to the substrate, obtaining an insoluble wettable coated substrate with a pH gradient.

The 1 m long gradient is then cut into seven 3 mm wide and 240 mm long path. Each path is provided with two collection stations in the form IEF electrode wicks from Amersham Pharmacia Biotech AB.

### Example 2 - Manufacturing a separating path with a pH-gradient for separation of proteins

1g Hisdidine (amino acid) base in 100 ml water is mixed with 1% UV curing agent (loctite 3201).

1g Lysine (amino acid) acid in 100 ml water is mixed with 1 % UV curing agent (loctite 3201).

The solutions are placed in the dosing apparatus (a Hawad syringe pump) that can be controlled. The dosing from each of the syringes can be varied with time. The two separate flows of material are merged together in a small static mixture, then dosed into the substrate though a needle.

The 30 mm wide VK1100 substrate for the pH -gradient is then wetted with a mixture of premixed amino acid and amino acid base and adhesive soluted in the solvent as the substrate at a constant speed flows out of the needle. The substrate with the solution added then passes an evaporation chamber causing the water to evaporate and then an UV source for curing. The substrate is re-spooled on a reel pulled by a 24 V DC motor.

If a current of 4,7 V on the 24 V DC motor is applied, a 1 m long gradient is obtained in 120 sek. The flow of the base during the 120 sek. is changed from 120 ml/hour to 0 ml/hour and the flow of the base is changed from 0 ml/hour to 120 ml/hour.

In this way a pH gradient is obtained with a starting pH of 7.5 and an end pH of 5. As the mixture of the amino acid and base has passed the UV source, the curing agent has fixed the materials to the substrate, obtaining an insoluble, wettable coated substrate with a pH gradient.
The 1 m long gradient is then cut into seven 3 mm wide and 240 mm long path. Each path is provided with two collection stations in the form a porous electrode wick as described above.

### Example 3 - Manufacturing a separating path with a pH-gradient for separation of proteins

0,1 mol Maleic acid in 100 ml acetone is mixed with 0,01% UV curing agent (Irgacure 369 from Cibasc).

0,1 mol Allylamine in 100 ml acetone is mixed with 0,01% UV curing agent (Irgacure 369 from Cibasc).

The solutions are placed in the dosing apparatus (a Haward syringe pump) that can be controlled. The dosing from each of the syringes can be varied with time. The two separate flows of material are merged together in a small static mixture, then dosed into the substrate though a needle.

In order to obtain a good adhesion of the acid and base to the substrate, it is pre-treated with e.g. hexene in as plasma process.

The 30 mm wide VK1100 substrate for the pH -gradient is then wetted with a mixture of acids, bases and adhesives soluted in the acetone as the substrate at a constant speed passes the premixed acid and base flowing out of the needle. The substrate with the solution added then passes an evaporation chamber for evaporation of the acetone and then an UV source for polymerising. The substrate is re-spooled on a reel pulled by a 24 VDC motor.

If a current of 4,7 V on the 24 V DC motor is applied, a 1 m long gradient is obtained in 120 sek. The flow of the base during the 120 sek. is changed from 160 ml/hour to 0 ml/hour and the flow of the base is changed from 0 ml/hour to 160 ml/hour.

In this way a pH gradient is obtained with a starting pH of 10 and an end pH of 3. As the mixture of the acid and base has passed the UV source, the curing agent has generated radicals, then polymerized the vinyl monomers resulting in a solid substance bonded to the substrate, thereby obtaining an insoluble wettable coated substrate with the pH gradient.

The 1 m long gradient is then cut into seven 3 mm wide and 240 mm long paths. Each path is provided with two collection stations in the form a porous electrode wick as described above.

### Example 4 - Manufacturing a separating unit with a pH-gradient for separation of proteins

A separating layer in the form of a pH gradient is fixed on a substrate material by reaction of anthraquinones with the substrate material. By using anthraquinones with two different side chains (an acid and a basic) and varying the supplied amount in the longitudinal direction a pH gradient is produced.

The substrate material for the pH-gradient was a polyethylene/polypropylene (PE/PP) felt from Freudenberg (VK1099, 60 g/m²), which was available in 30 mm wide rolls.

As acid pH carrying agent is used 4-(2-Anthraquinoyl)-4-oxo-3-aza-butanoic acid in a 2,5 mM solution in 96% ethanol.

As basic pH carrying agent is used N-(3-diethylamino-1-propylamino)-9,10-anthraquinone)-2-carboxamide in a 2,5 mM solution in 96% ethanol.

A set-up as sketched in figure 3 was used. A length of felt was spooled to real 1, and then connected to real 2 as illustrated. The set-up is made such that the felt can be spooled from real 1 to real 2 at a constant speed. The felt is led past the application system at a constant speed of 21 cm/min.

60 ml of the acid component is filled in a syringe, and fixed in a Dual Syringe Pump model 33 form Harvard apparatus. 60 ml of the basic component is filled in a syringe and fixed in the Dual Syringe Pump as well. By silicone tubing the two syringes are connected to the inlet of an airbrush (model no. 155-7 from Badger Air Brush CO.). Nitrogen at a pressure of 0,1 - 0,2 bar is led to the airbrush as air atomising agent.

The pH gradient is produced by leading the acid component to the airbrush at a constant rate of 200 ml/min. for 5 seconds. Then the amount of acid component led to the airbrush is decreased linearly from 200 ml/min. to 0 ml/min in 80 seconds, while the amount of basic component is increased linearly from 0 ml/min. to 200 ml/min. also in 80 seconds.

After the felt has passed the applicator, the ethanol was evaporated from the surfaces and the anthraquinones containing the pH active chemical groups react with and bond to the felt.

The described procedure gives an approximately 30 cm long separating path (strop) with a separating layer having a pH gradient. By test with a pH indicator liquid, the strips showed a pH range from pH 6 to above pH 7,5. For protein separation the felt was cut into strips of 3 mm width - and only the middle 4 of each section used. Each path is provided with two collection stations in the form a porous electrode wick as described above.

### Example 5 - Manufacturing of a separating unit with an acid surface for separation of proteins.

A pH active surface is produced on a substrate material by reaction of anthraquinones with the substrate material. The anthraquinones used have pH active side chains thus giving the pH active surface.

The substrate material for the pH active surface was a polyethylene/polypropylene (PE/PP) felt from Freudenberg (VK1099, 60 g/m²), which was available in 30 mm wide rolls.

As acid pH carrying agent is used 4-(2-Anthraquinoyl)-4-oxo-3-aza-butanoic acid in a 2,5 mM solution in 96% ethanol.

A set-up as sketched in figure 4 was used. A length of felt was spooled to real 1, and then connected to real 2 as illustrated. The set-up is made such that the felt can be spooled from real 1 to real 2 at a constant speed. The felt is led past the application system at a constant speed of 24 cm/min.

60 ml of the acid component is filled in a syringe, and fixed in a Dual Syringe Pump model 33 form Harvard apparatus. By silicone tubing the syringe is connected to the inlet of an airbrush (model no. 155-7 from Badger Air Brush CO.). Nitrogen at a pressure of 0,1 - 0,2 bar is led to the airbrush as air atomising agent.

Leading the acid component to the airbrush at a constant rate of 200 ml/min, thus applying it on the substrate material produces the pH active surface.

After the felt has passed the applicator, the ethanol was evaporated from the surfaces and the anthraquinones reacted with the felt fixing the pH active chemical groups.

The described procedure gives an equal acid surface, with a pH of about 5.5. For protein separation the felt was cut into paths of 3 mm width - and only the middle 4 of each section used. Each path is provided with two collection stations in the form a porous electrode wick as described above.

## Claims

1. A method of separating biocomponents contained in a liquid including at least two biocomponents having different isoelectric points (pI values), said method comprising the steps of
i. providing a first separating path in the form of a separating coating carried on a substrate, wherein said separating coating comprises one or more separating layers, at least one separating layer consisting of or comprising one or more pH active components, linked to the substrate and comprising pH active groups defined as chemical groups that are capable of being protonated or deprotonated in aqueous environments,
ii. applying the liquid with the biocomponents to the separating coating,
iii. applying a voltage over the separating path by applying a positive electrode and a negative electrode in contact with the separating coating at a distance from each other along the separating path, the area closer to the negative electrode being designated the negative end of the separating path, and the area closer to the positive electrode being designated the positive end of the separating path,
iv. allowing at least some of the biocomponents to travel towards one of the electrodes to one or more collection stations,
v. collecting the once separated biocomponents from at least one collection station
**characterized in that** the separating coating has a thickness of 1,2, 5,10 or 50 or even up to about 10,000 molecular layers of the molecules constituting the separating layers.

2. A method according to claim 1 wherein said separating coating has a pH value provided by said pH active group, which pH value is lower than one or more of the pI values of the biocomponents and higher than one or more of the pI values of the other biocomponents, preferably the separating coating has a pH value provided by said pH active group, which pH value is at least 0.1, such as at least 0.5, or such as at least 1 pH unit lower than one or more of the pI values of the biocomponents and at least 0.1, such as at least 0.5, or such as at least 1 pH unit higher than the pI value of the other biocomponents.

3. A method according to any one of the claims 1 and 2 wherein said separating coating has a pH value which varies less than 1 pH unit, such as less than 0.5 pH unit or even less than 0.1 unit along the separating path, said separating coating preferably having a pH value which is essentially equal along the separating path.

4. A method according to any one of the claims 1-2 wherein said separating coating has a pH value which comprises a pH gradient along the separating path, said gradient being continuously or stepwise along the separating path, said pH gradient preferably including a pH variation of up to about 8 pH values, more preferably between 0.1 and 5 pH units, such as between 0.5 and 3 units along the separating path.

5. A method according to any one of the claims 1-4 wherein said separating path comprises two collection stations, one collection station designated the high pH collecting station placed closer to the negative electrode than the other collection station designated the low pH collecting station, the method comprising the step of collecting the biocomponents from one or both of the collecting stations, said collected biocomponents being subjected to a further separation, preferably using another separating path with pH active components.

6. A method according to any one of the claims 1-5 wherein the collected, once separated biocomponents are subjected to further separation by applying the biocomponents in a liquid onto a second separating path in the form of a separating coating carried on a substrate, wherein said separating coating comprises one or more separating layers, at least one separating layer consisting of or comprising one or more pH active components, linked to the substrate and comprising pH active groups, the pH value or the range of pH values of the separating coating of the second separating path being different from the pH value or the range of pH values of the separating coating of the first separating path.

7. A method according to claim 6 wherein a voltage is applied over the second separating path by applying a positive electrode and a negative electrode in contact with the separating coating at a distance from each other along the separating path, at least some of the biocomponents being allowed to travel towards one of the electrodes to one or more collection stations.

8. A method according to any one of the claims 1-7 wherein the biocomponents are separated on 3 or more separating paths, such as between 4 and 300, such as up to 264, such as up to 200 separating paths, each separating path comprising at least one collection station, such as two collection stations, one collection station designated the high pH collecting station placed closer to the negative electrode than the other collection station designated the low pH collecting station, said separating paths being in the form of separating coatings carried on substrates, wherein each separating coating independent of each other comprises one or more separating layers, at least one separating layer of each separating coatings consisting of or comprising one or more pH active components, linked to the substrate and comprising pH active groups, the pH value or the range of pH values of at least two, preferably at least 3, such as 4, 5, 6, 7, 8, 9, 10 or even more of the separating coatings of the respective separating paths being different from each other, **characterized in that** the separating coatings each have a thickness of 1,2, 5,10 or 50 or even up to about 10,000 molecular layers of the molecules constituting the separating layers.

9. A method according to any one of the claims 1-8 wherein at least one separating path comprises 3 or more collection stations placed along the separating path.

10. A method according to any one of the claims 1-9 wherein at least one separating path comprises 2 or more separating path sections along the separating path, said separating path sections comprising separating coatings with different pH values, the difference in pH value of the separating coatings between two adjacent separating path sections preferably being in the interval between 0.5 and 4 pH unit, such as between 1 and 2 pH values.

11. A method according to any one of the claims 1-10 wherein the biocomponents are separated on a plurality of separating paths, each separating path comprising two collection stations, one collection station designated the high pH collecting station placed closer to the negative electrode than the other collection station designated the low pH collecting station, said separating paths being in the form of separating coatings carried on substrates, wherein each separating coating independent of each other comprises one or more separating layers, at least one separating layer of each separating coatings consisting of or comprising one or more pH active components, linked to the substrate and comprising pH active groups, the pH value or the range of pH values of at least two, preferably at least 3, such as 4, 5, 6, 7, 8, 9, 10 or even more of the separating coatings of the respective separating paths being different from each other.

12. A method according to claim 11, the method comprising applying the biocomponents in a liquid to a first separating path, applying a voltage over the electrodes at the negative and the positive end of the separating path, allowing at least some of the biocomponents to travel towards one of the electrodes to one of the collection stations, collecting the biocomponents from at least one of the high pH and low pH collection stations, performing further separations using further separating paths by applying voltage and collecting, said further separations including collecting the biocomponents from a collecting station, if the collection station is a low pH collection station subjecting the collected biocomponents to a further separation using a separating path having a separation composition with a lower pH or range of pH value than the previously used separating path, if the collection station is a high pH collection station, subjecting the collected biocomponents to a further separation using a separating path having a separation composition with a higher pH or range of pH value than the previous used separating path.

13. A method according to any one of the claims 1-12 comprising the steps of
• separating the biocomponents on a first separating path having a first pH value, and collecting the biocomponents from a low pH collecting station closer to the positive electrode than to the negative electrode,
• separating the biocomponents on a second separating path having a second pH value lower than the first pH value,
• and collecting the biocomponents from a high pH collecting station closer to the negative electrode than to the positive electrode, to thereby collect the biocomponents having a pI value between the first and the second pH value.

14. A method according to any one of the claims 1-13 comprising the steps of
• separating the biocomponents on a first separating path having a first pH value, and collecting the biocomponents from a high pH collecting station closer to the negative electrode than to the positive electrode,
• separating the biocomponents on a second separating path having a second pH value higher than the first pH value,
• and collecting the biocomponents from a low pH collecting station closer to the positive electrode than to the negative electrode, to thereby collect the biocomponents having a pI value between the first and the second pH value.

15. A method according to any one of the claims 1-12 comprising the steps of
• separating the biocomponents on a separating path comprising 2 or more separating path sections along the separating path, said separating path sections comprising separating coatings with a first and a second pH value which differs from each other, said separating path comprising a section collection station at the border between the separating path sections, and
• collecting the biocomponents from said section collection station, to thereby collect the biocomponents having a pI value between the first and the second pH value.

16. A method according to any one of the claims 1-15 wherein the biocomponents include one or more of the components selected from the group consisting of tissue, cells, body fluids, blood components, microorganism, derivatives thereof, or parts thereof.

17. A method according to any one of the claims 1-16 wherein the biocomponents include one or more biomolecules, such as biomolecules of microbial, plant, animal or human origin or synthetic molecules resembling them, preferably selected from the group consisting of proteins, glyco proteins, nucleic acids, such as RNA, DNA including cDNA, PNA, LNA oligonucleotides, peptides, hormones, antigens, antibodies, lipids, and complexes including one or more of these molecules, said biomolecule preferably being selected from the group consisting of proteins and protein complexes.

18. A method according to any one of the claims 1-17 wherein the voltage applied over one or more separating paths is up to about 75.000 V/m, such as between 10 and 50.000 V/m.

19. A method according to any one of the claims 1-18 wherein the voltage applied over one or more separating paths is between a pulsating voltage, such as a voltage shifting between an ordinary direction to a reversed direction, the designation of positive and negative electrode being determined with respect to the situation where the voltage has ordinary direction, the total electrical power in the reversed direction being less such as at least 5 %, such as at least 50 % than the electrical power in the ordinary direction.

20. A method according to any one of the claims 1-19 wherein the voltage applied over one or more separating paths is gradually increased continuously or stepwise.

21. A method according to any one of the claims 1-20 wherein the liquid is an organic or an aqueous liquid, preferably comprising at least 25 % by vol. of water, more preferably comprising at least about 45 % by vol. of water, more preferably said liquid comprising one or more of the components selected from the group consisting of acetic acid, ethanol, glycerol, phenol, detergents e.g. CHAPS, and buffer systems such as a buffer system comprising one or more of the components selected from the group consisting of ••-mercaptoethanol, urea, thiourea, guanidinium chloride and DTT.

22. A method according to any one of the claims 1-21 wherein the biocomponents are present in the liquid in a concentration of between 0.1-20 •g/•l, such as between 1 and 10 •g/•l.

23. A method according to claim 22 wherein the biocomponents are in the form of proteins or protein complexes, the concentration preferably being between up to 9 •g/•l, such as between 7-9 •g/•l, more preferably between 0.1 and 5 •g/•l, such as about 2, 3 or 4 ·g/·l.

24. A method according to claim 22 wherein the biocomponents are in the form of nucleic acids, the concentration preferably being between up to 11 •g/•l, such as between 9-11•g/•l, more preferably between 0.1 and 5 •g/•l, such as about 2, 3 or 4 •g/•l.

25. A method according to any one of the claims 1-24 wherein additional liquid is added to the biocomponents during the separation, said additional liquid preferably being added at the one or more collection stations.

26. A method according to any one of the claims 1-25 wherein the collection stations are in the form of a collecting unit comprising a collecting space e.g. in the form of a porous material, a collecting chamber or collecting cavity.

27. A method according to claim 26 wherein said method comprises the step of removing the collecting unit comprising collected biocomponents from one separation path after separation on said separating path, and applying the collected biocomponents onto another separating path, e.g. by applying the collecting unit onto the separating path, by applying additional liquid to the collecting unit and letting it pass onto the separating path, and/or by squeezing the collecting unit and applying the squeezed out liquid with biocomponents onto the separating path.

28. A method according to any one of the claims 1-25 wherein the collection stations are in the form of an opening in or an overflow edge of the separating path, said collected biocomponents flowing via the opening or overflow edge of the separating path to another separating path, optionally via a pipe comprising a vent for controlling the feeding of liquid with biocomponents onto the other separating path.

29. A method according to any one of the claims 1-24 and 27 wherein the collection stations are in the form of an opening in or an overflow edge of the separating path, said collected biocomponents flowing via the opening or overflow edge of the separating path to a collecting unit comprising a collecting space e.g. in the form of a porous material, a collecting chamber or collecting cavity.

30. A method according to any one of the claims 26 and 29 wherein the collecting unit is placed in direct contact with another separating path.

31. A method according to any one of the claims 1-30 wherein the separating time defined as the time of applying and holding a voltage over a separating path after at least some of the biocomponents have been applied, is sufficient for obtaining a separation of the biocomponents, to thereby collect separated biocomponents at least one collection station.

32. A method according to any one of the claims 1-31 wherein the separating time defined as the time of applying and holding a voltage over a separating path after at least some of the biocomponents have been applied, is between 1 second and 73 hours, such as between 1 minute and 24 hours.

33. A method according to any one of the claims 1-32, the method comprising the step of applying the biocomponents in the liquid onto a separating path by loading the liquid with the biocomponents onto a local area of the separating path, such as an area comprising between 1 and 25 % of the separating path area, such as between 2 and 10 % of the separating path area.

34. A method according to any one of the claims 1-33, the method comprising the step of applying the biocomponents in the liquid onto a separating path by loading the liquid with the biocomponents onto at least 50 % of the area of the surface of the separating coating of the separating path, such as an area comprising between 60 and 100 % of the surface of the separating coating of the separating path, such as between 75 and 90 % of the surface area of the separating coating of the separating path.

35. A separating system for use in the separation of biocomponents contained in a liquid including at least two biocomponents having different isoelectric points (pI values), said separating system comprising a set of separating paths, each in the form of a separating coating carried on a substrate, said set of separating paths including 2 or more separating paths, the separating coating of each of said separating paths comprising one or more separating layers, at least one separating layer consisting of or comprising one or more pH active components, linked to the substrate and comprising pH active groups defined as chemical groups that are capable of being protonated or deprotonated in aqueous environments, the pH active groups providing the separating coating with a pH value along the separating path, the separating system comprising 2 or more separating paths that differ from each other with respect to the pH value of the separating coating, **characterized in that** the separating coatings each have a thickness of 1,2, 5,10 or 50 or even up to about 10,000 molecular layers of the molecules constituting the separating layers.

36. A separating system according to claim 35, further comprising one or more pairs of electrodes, each comprising a positive electrode and a negative electrode in contact with or capable of being brought into contact with the separating coating at a distance from each other along a separating path.

37. A separating system according to claim 36 wherein the system comprises separating paths and pairs of electrodes, each separating path comprising a separating coating and a pair of electrodes in or adapted to be in contact with the separating coating at a distance from each other along the separating path.

38. A separating system according to any one of the claims 35-37 wherein at least one of the separating paths comprises one, two or more collection stations, preferably two, three or all of the separating paths comprising one, two or more collection stations.

39. A separating system according to claim 38, said one or more collection stations being in the form of a collecting unit comprising a collecting space e.g. in the form of a porous material, a collecting chamber or collecting cavity.

40. A separating system according to any one of the claims 35-38 wherein said one or more collection stations are in the form of an opening in or an overflow edge of the separating path.

41. A separating system according to claim 40 wherein said system comprises a guiding channel applied beneath the collecting opening or overflow, said channel optionally comprising a vent, said channel preferably terminating above another separating path, so that liquid collected at the collection station is guided via the channel onto the other separating path.

42. A separating system according to any one of the claims 35-38 wherein said one or more collection stations are in the form of an opening in or an overflow edge of the separating path, said system further comprising a collecting unit applied beneath the collecting opening or overflow, said collecting unit comprising a collecting space e.g. in the form of a porous material, a collecting chamber or collecting cavity.

43. A separating system according to any one of the claims 35-42 wherein at least one, such as half of or all of the separation paths, each comprise at least two collection stations, said collection stations being in direct contact with the respective electrodes of the pair of electrodes.

44. A separating system according to any one of the claims 35-43 wherein the separating coating of one or more of the separating paths has a pH value which varies less than 1 pH unit, such as less than 0.5 pH unit or even less than 0.1 unit along the separating path, said separating coating preferably having a pH value which is essentially equal along the separating path.

45. A separating system according to any one of the claims 35-44 wherein the separating coating of one or more of the separating paths has a pH value which comprises a pH gradient along the separating path, said gradient being continuously or stepwise along the separating path, said pH gradient preferably including a pH variation of up to about 8 pH values, more preferably between 0.1 and 5 pH units, such as between 0.5 and 3 units along the separating path.

46. A separating system according to any one of the claims 35-45 wherein the pH value or the range of pH values of the separating coating of a first separating path are different from the pH value or the range of pH values of a second separating coating.

47. A separating system according to any one of the claims 35-46 wherein the separating system comprises 3 or more separating paths, such as between 4 and 10 separating paths, each separating path comprising at least one collection station, such as two collection stations, one collection station designated the high pH collecting station placed closer to the negative electrode, or where a negative electrode is adapted to be placed, than the other collection station designated the low pH collecting station, said separating paths being in the form of separating coatings carried on substrates, wherein each separating coating independent of each other comprises one or more separating layers, at least one separating layer of each separating coatings consisting of or comprising one or more pH active components, linked to the substrate and comprising pH active groups, the pH value or the range of pH values of at least two, preferably at least 3, such as 4, 5, 6, 7, 8, 9, 10 or even more of the separating coatings of the respective separating paths being different from each other.

48. A separating system according to any one of the claims 35-47 wherein one or more of the separating paths each comprise 3 or more collection stations placed along the separating path.

49. A separating system according to any one of the claims 35-48 wherein one or more of the separating paths each comprise 2 or more separating path sections along the separating path, said separating path sections differing from each other with respect to pH value, the difference in pH value of the separating coatings between two adjacent separating path sections preferably being in the interval between 0.5 and 4 pH unit, such as between 1 and 2 pH values.

50. A separating system according to claim 49 wherein said separating path comprises a section collection station placed at the border between the separating path sections.

51. A separating system according to any one of the claims 35-50 wherein the separating system comprises a plurality of separation paths, each separating path comprising two collection stations, one collection station designated the high pH collecting station placed closer to the negative electrode than the other collection station designated the low pH collecting station, said separating paths being in the form of separating coatings carried on substrates, wherein each separating coating independent of each other comprises one or more separating layers, at least one separating layer of each separating coatings consisting of or comprising one or more pH active components, linked to the substrate and comprising pH active groups, the pH value or the range of pH values of at least two, preferably at least 3, such as 4, 5, 6, 7, 8, 9, 10 or even more of the separating coatings of the respective separating paths being different from each other.

52. A separating system according to any one of the claims 35-51 wherein at least one, such as half of, or all of the separation paths, each have a separating coating comprising a separating layer in the form of a gel, such as a gel selected from the group consisting of polyamide gels, such as a cross-linked polyacrylamide gel containing sodium dodecylsulfate (SDS), an ampholyte-containing cross-linked gel (IEF), agarose gel, cellulose gel and silica gel.

53. A separating system according to any one of the claims 35-52 wherein at least one, such as half of, or all of the separation paths, each have a separating coating comprising one or more separating layers, wherein the pH active components include components selected from the group consisting of acidic components, such as organic acids including saturated aliphatic monocarboxylic acids having 1-20 carbon atoms, particularly acetic acid, saturated aliphatic dicarboxylic acids having 2-20 carbon atoms, particularly malonic acid, unsaturated aliphatic monocarboxylic acids having 3-20 carbon atoms, particularly acrylic acid; saturated aliphatic monosulphonic acids having 1-20 carbon atoms, particularly methane sulfonic acid; amino acids including aspartic acid and glutamic acid; fatty acids such as saturated or unsaturated monocarboxylic fatty acids having 20-100 carbon atoms, particularly caprylic acid, capric acid and cerotic acid, and di- and poly acids thereof and derivatives thereof.

54. A separating system according to any one of the claims 35-53 wherein at least one, such as half of, or all of the separation paths, each have a separating coating comprising one or more separating layers, wherein the pH active components include components selected from the group consisting of basic components, such as organic basic including primary amines, secondary amines, tertiary amines, di- and poly functional amines; amino acids including histidine, lysine and arginine, and di- and poly basic thereof and derivatives thereof.

55. A separating system according to any one of the claims 35-54 wherein at least one, such as half of, or all of the separation paths, each have a separating coating comprising one or more separating layers, wherein the pH active components include components selected from the group consisting of polar components which are non-charged at a pH value about 6, such as amino acids including cystein, asparagine, glutamine, threonine, tyrosine, serine, glycine and di- and polymers thereof and derivatives thereof.

56. A separating system according to any one of the claims 35-55 wherein at least one, such as half of, or all of the separation paths comprise a pH gradient in the form of a stepwise or continuously graduating pH value change.

57. A separating system according to any one of the claims 35-56 wherein at least one, such as half of, or all of the separation paths, each have a separating coating comprising a pH gradient, said pH gradient being provided in the form of a ligand with a pH active component, the gradient preferably being constituted by a change of the number of ligands carrying pH active components.

58. A separating system according to any one of the claims 35-57 wherein one or more of the separation coatings include one or more of the components selected from the group consisting of acids, such as organic acids, amino acids, fatty acids and poly acids thereof; bases such as organic bases, amino acids and poly bases thereof; aromates such as benzene, naphthalen, anthracene, phenanthrene and substituted compounds thereof; metal components, such a organometals such as alkylmagnesium and lithium tri(tert-butoxy)aluminium hydride; halogen containing compounds such as 1-iod-2-methylpropane, flurocycohexane and methylthicyclohexane; zwitter ions e.g. ampholines; antigens and antibodies.

59. A separating system according to any one of the claims 35-58 wherein one or more of the separation coatings include one or more polymers, preferably selected from the group consisting of thermoplastics such as thermoplastic elastomers including block copolymer such as SEBS, SBS, SIS, TPE-polyether-amide, TPE-polyether-ester, TPE-urethanes, TPE PP/NBR, TPE-PP/EPDM, TPE-vulcanisates and TPE-PP/IIR; rubbers such as butadiene rubber, isoprene rubber, nitril rubber, styrene-butadiene rubber and urethane rubber; acrylates; polyolefins such as polyethylene, polypropylene and polybutylene including its isomers; liquid crystal polymers; polyesters; polyacrylates; polyethers; polyurethane; thermplastic vulcanisates; and silicon rubber.

60. A separating system according to any one of the claims 35-59 wherein the separation layer or layers include one or more pH active components, said pH active components being linked to the substrate optionally via one or more linker molecules and/or one or more layers of the separating coating, via a photochemically reactive group, such as a quinone.

61. A separating system according to any one of the claims 57 and 60 wherein the quinone is selected from the group consisting of anthraquinones, phenanthrenequinones, benzoquinones, naphthoquinones, said quinones preferably being substituted by a functional group selected from the group consisting of carboxylic acids, sulfonic acid derivatives, esters, acid halides, acid hydrazides, semicarbazides, thiosemicarbaxides, nitriles, aldehydes, ketones, alcohols, thioles, disulphides, amines, hydrazines, ethers, epoxides, sulphides, halides and derivatives thereof.

62. A separating system according to any one of the claims 57 and 60 wherein the combination of quinone and active component is selected from the group consisting of quinones having the structural formulas I, II, III, IV, V, VI, VII, VIII, IX, X, XI, XII, XIII, XIV, XV, XVI, and XVII

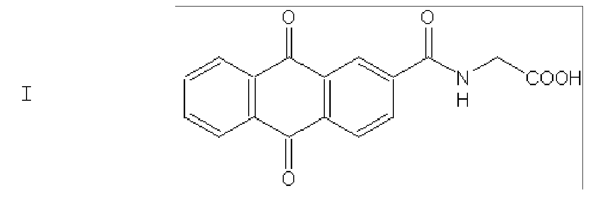

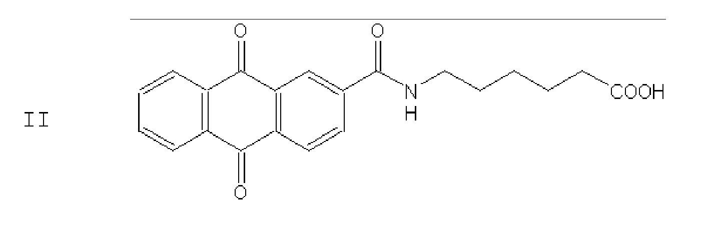

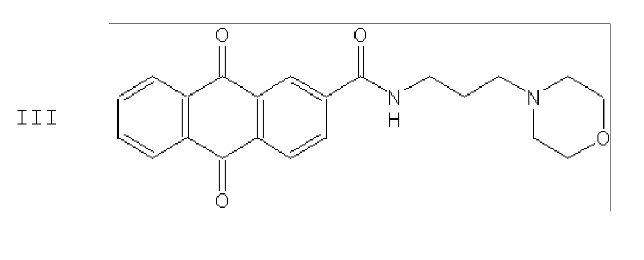

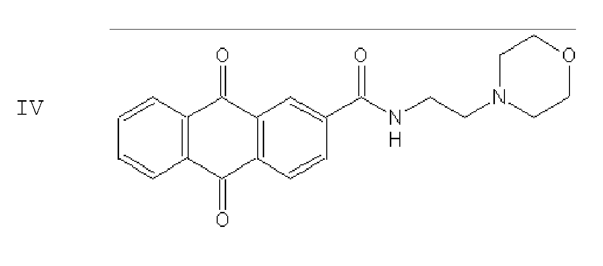

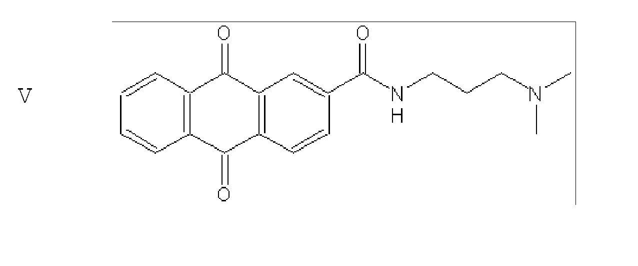

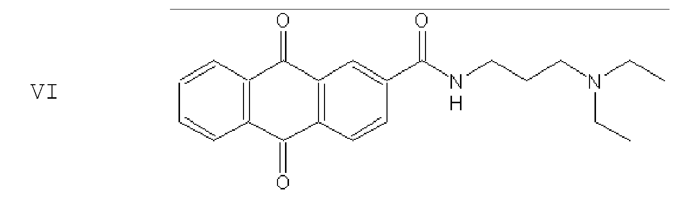

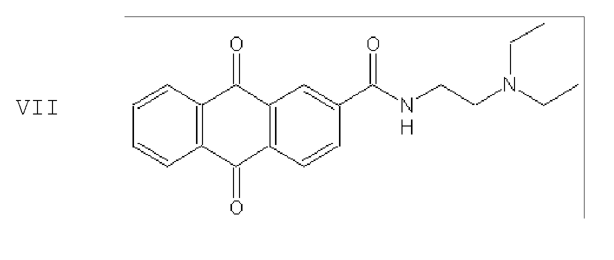

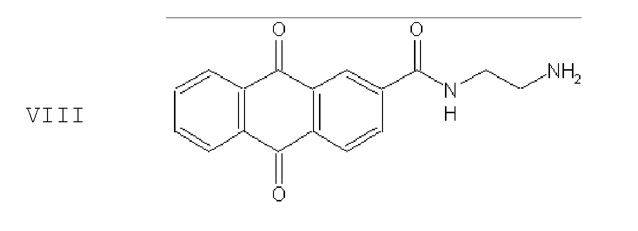

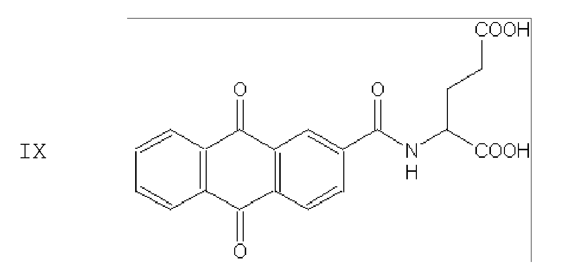

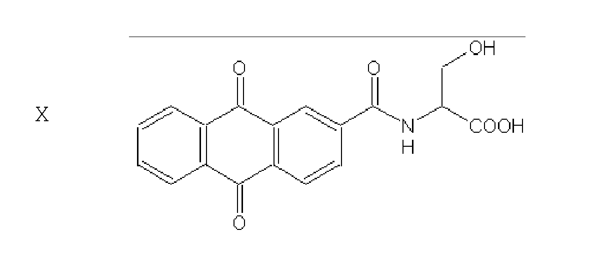

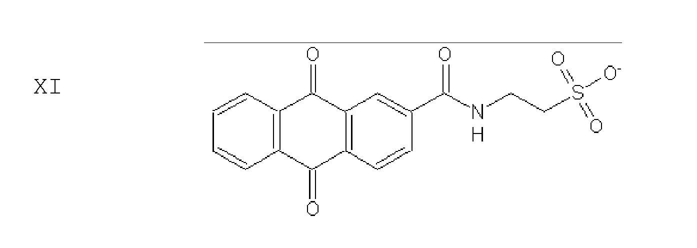

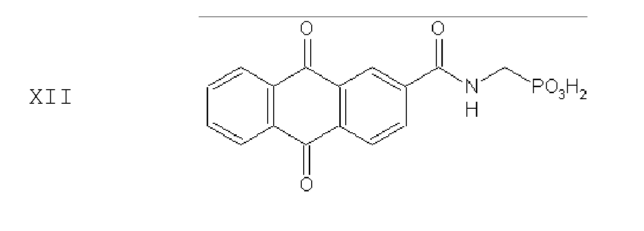

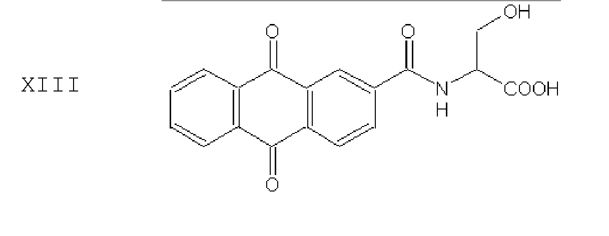

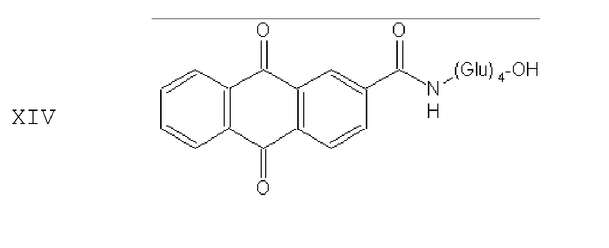

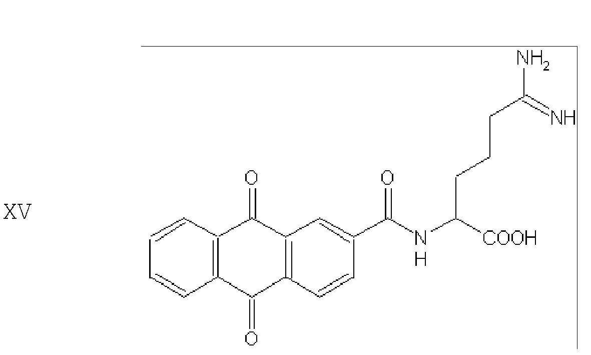

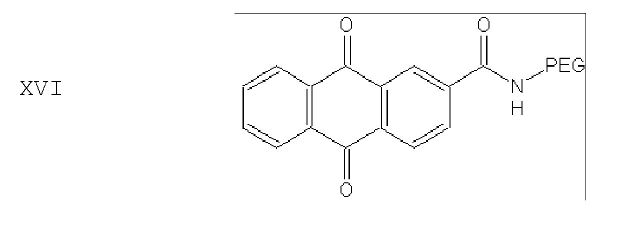

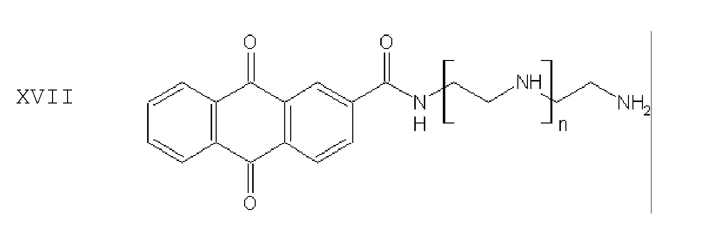

63. A separating system according to any one of the claims 35-62 wherein the separation layer or layers include one or more pH active components, said pH active components being linked to the substrate by being embedded in a matrix, preferably of a polymeric material, more preferably selected from the group consisting of thermoplastics such as thermoplastic elastomers including block copolymer such as SEBS, SBS, SIS, TPE-polyether-amide, TPE-polyether-ester, TPE-urethanes, TPE PP/NBR, TPE-PP/EPDM, TPE-vulcanisates and TPE-PP/IIR; rubbers such as butadiene rubber, isoprene rubber, nitril rubber, styrene-butadiene rubber and urethane rubber; acrylates; polyolefins such as polyethylene, polypropylene and polybutylene including its isomers; liquid crystal polymers; polyesters; polystyrene; polyacrylates; polyethers; polyurethane; thermplastic vulcanisates; and silicon rubber.

64. A separating system according to any one of the claims 35-63 wherein one or more of the substrates each are in the form of a sheet-like material, preferably selected from a cord, a hollow pipe or a three dimensional unit, wherein one dimension designated the thickness is shorter than the two other dimensions designated the length and the width, respectively, said sheet like substrate preferably being selected from the group consisting of a tape, a band, a strip, a sheet, a plate and a cord.

65. A separating system according to any one of the claims 35-64 wherein one or more of the substrates each are in the form of a sheet-like, three dimensional unit, wherein one dimension designated the length is more than 2 times, preferably more than 5 times and even more preferably more than 10 times the longest of the other two dimensions, preferably the length being at least 10 cm, such as 25 or 50 cm, more preferably at least 100 cm and even more preferably at least 200 cm.

66. A separating system according to any one of the claims 35-65 wherein one or more of the substrates each are in the form of a cord or a three dimensional unit, wherein one dimension designated the thickness is between 1 ·m and 10 mm, more preferably between 10 and 200 ·m.

67. A separating system according to any one of the claims 35-66 wherein one or more of the substrates each are in the form of a cord or a three dimensional unit, wherein one dimension designated the width is between 1 and 1000 mm, more preferably between 3 and 300 mm.

68. A separating system according to any one of the claims 35-67 wherein one or more of the substrates each are in the form of a tape or strip having a thickness with a thickness outer surface, a first and a second side with a first and a second outer surfaces, respectively, at least one of said thickness outer surfaces and first and second outer surfaces being partly or totally covered with separating coating, preferably at least one of said first and second outer surfaces being partly or totally covered with said separating coating, more preferably essentially the whole of at least one of said first and second outer surfaces being covered with said separating coating.

69. A separating system according to any one of the claims 35-68 wherein one or more of the substrates each are in the form of a channel or a pipe.

70. A separating system according to any one of the claims 35-69 wherein one or more of the substrates each are of a material selected from the group consisting of polymers, such as polyolefins including polyethylene (PE) and polypropylene (PP); polytetrafluoroethylene (PTFE); tetra-fluoroethylene-hexafluoropropylen-copolymers (FEP); polyvinyl-difluoride (PVDF); polyamides; polyesters polyvinylchloride (PVC); rubbers such as silicon rubbers; glass; paper; carbon fibres; ceramics; metals or mixtures or combinations thereof.

71. A separating system according to any one of the claims 35-70 wherein one or more of the separating coatings each have a thickness of 1 molecular layer of the molecules constituting the separating layer.

72. A separating system according to any one of the claims 35-70 wherein one or more of the separating coatings each have a thickness of between 0.01 and 15 ·m, such as between 0.5 and 10 ·m.

73. A separating system according to any one of the claims 35-72 wherein one or more of the substrates each comprise a precoating, the separating coating being applied onto said precoating, said precoating preferably being applied using CVD.

74. A separating system according to any one of the claims 35-73 wherein a topcoating is applied onto the one or more of the substrates, said topcoating being sufficiently thin so as not to mask the pH active components totally, said topcoating preferably being a polyacrylamide.

75. A separating system according to any one of the claims 35-74 wherein one or more of the separating paths, such as half of or all of the separating paths have a length of between 1 mm and 100 cm, such as between 10 and 500 mm.

76. A separating path for use in the separation of biocomponents contained in a liquid including at least two biocomponents having different isoelectric points (pI values), said separating paths being in the form of a separating coating carried on a substrate, the separating coating comprising one or more separating layers, at least one separating layer consisting of or comprising one or more pH active components comprising pH active groups defined as chemical groups that are capable of being protonated or deprotonated in aqueous environments, the pH active groups providing the separating coating with a pH value along the separating path, the separating path further comprising one or more collection stations, such as two or more collection stations, **characterized in that** the separating coating has a thickness of 1,2, 5,10 or 50 or even up to about 10,000 molecular layers of the molecules constituting the separating layers.

77. A separating path according to claim 76 wherein at least one of said one or more collection stations is in the form of a collecting unit comprising a collecting space e.g. in the form of a porous material, a collecting chamber or collecting cavity.

78. A separating path according to any one of the claims 76 and 77 wherein at least one of said one or more collection stations is in the form of an opening in or an overflow edge of the separating path.

79. A separating path according to claim 78 wherein said separating path comprises a guiding channel beneath the collecting opening or overflow, said channel optionally comprising a vent.

80. A separating path according to any one of the claims 76-79 wherein said one or more collection stations are in the form of an opening in or an overflow edge of the separating path, said separating path further comprising a collecting unit applied beneath the collecting opening or overflow, said collecting unit comprising a collecting space e.g. in the form of a porous material, a collecting chamber or collecting cavity.

81. A separating unit for use in the separation of biocomponents contained in a liquid including at least two biocomponents having different isoelectric points (pI values), said separating unit comprising a set of separating paths each in the form of a separating coating carried on a substrate, said set of separating paths including 2 or more separating paths, the separating coating of each of said separating paths comprising one or more separating layers, at least one separating layer consisting of or comprising one or more pH active components comprising pH active groups defined as chemical groups that are capable of being protonated or deprotonated in aqueous environments, the pH active groups providing the separating coatings with pH values along the separating paths, the separating unit comprising 2 or more separating paths that differ from each other with respect to the pH values of the separating coatings, each of the separating paths comprising one or more collecting stations, the separating path being connected to each other so that liquid can be passed from one collection station of one separating path to the separating coating of another separating path of the unit, **characterized in that** the separating coatings each have a thickness of 1,2, 5,10 or 50 or even up to about 10,000 molecular layers of the molecules constituting the separating layers.

82. A separating unit according to claim 81 wherein each of said one or more collection stations is in the form of a collecting unit comprising a collecting space e.g. in the form of a porous material, a collecting chamber or collecting cavity, the collecting unit of one separating path preferably being in contact with the separating coating of another separating path of the unit.

83. A separating unit according to any one of the claims 81 and 82 wherein said one or more collection stations are in the form of an opening in or an overflow edge of the separating path, the opening or overflow edge of one separating path preferably being fixed above the separating coating of another separating path of the separating unit.

84. A separating unit according to claim 83 wherein one or more of the separating paths that comprise one or more collection stations in the form of an opening in or an overflow edge of the separating path, further comprise at least one guiding channel beneath one collecting opening or overflow edge, said channel optionally comprising a vent.

85. A separating unit according to any one of the claims 81-84 wherein at least one collection station is in the form of an opening in or an overflow edge of a separating path, said separating unit further comprising a collecting unit applied beneath the collecting opening or overflow edge, said collecting unit comprising a collecting space e.g. in the form of a porous material, a collecting chamber or collecting cavity.

86. A separating unit according to any one of the claims 81-85, said separating unit comprising a plurality of separating paths, such as more than 3, such as between 4 and 10 separating paths, each separating path comprising a negative and a positive electrode station that either comprises a negative/positive electrode or where a negative/positive electrode is adapted to be placed, each separating path comprising at least one collection station, such as two collection stations, one collection station designated the high pH collecting station placed closer to the negative electrode station than the other collection station designated the low pH collecting station, said separating paths being in the form of separating coatings carried on substrates, wherein each separating coating independent of each other comprises one or more separating layers, at least one separating layer of each separating coating consisting of or comprising one or more pH active components, linked to the substrate and comprising pH active groups, the pH value or the range of pH values of at least two, preferably at least 3, such as 4, 5, 6, 7, 8, 9, 10 or even more of the separating coatings of the respective separating paths being different from each other.

87. A separating unit according to claim 86 wherein the selection path is connected to each other so that liquid can be passed via the collection stations from one collection station of one separating path to the separating coating of another separating path of the unit, the pH values of the separating coatings of the respective separating paths being selected so that a low pH collection station from one separating path is able to pass liquid with biocomponents onto another separating path with a lower pH value or range of pH values than the separating path from which the liquid with biocomponents was passed, and a high pH collection station from one separating path is able to pass liquid with biocomponents onto another separating path with a higher pH value or range of pH values than the separating path from which the liquid with biocomponents was passed.
